# EUROPEAN PATENT APPLICATION

(11) **EP 4 737 948 A1**
(43) Date of publication of application: **06.05.2026**
(21) Application number: 24831921.2
(22) Date of filing: 24.06.2024
(51) Int. Cl.: G01S 19/48, G01C 21/28, G08G 1/09

(54) **MOVEMENT CONTROL DEVICE, MOVEMENT CONTROL METHOD, AND MOVEMENT CONTROL PROGRAM**

(30) Priority: 30.06.2023 JP 2023108895
(71) Applicant: Broadleaf Co., Ltd., Tokyo 140-0002 (JP)
(72) Inventor: HIRANO Yoshitake, Tokyo 140-0002 (JP)
(74) Representative: Grünecker Patent- und Rechtsanwälte PartG mbB
(86) International application number: PCT/JP2024/022902
(87) International publication number: WO 2025/005061

(57) **Abstract**

A movement control device (1) controls the movement of a vehicle (V) on the basis of information relating to the current position of the vehicle (V). Specifically, the movement control device (1) comprises: an own-position estimating unit that estimates the current position of the vehicle (V) on the basis of GNSS information; an environment information acquiring unit that acquires environment information around the vehicle (V); and a movement information acquiring unit that acquires movement information of the vehicle (V). The own-position estimating unit estimates the current position of the vehicle (V) on the basis of the environment information when the GNSS information cannot be acquired. The own-position estimating unit estimates the current position of the vehicle (V) on the basis of the movement information when the GNSS information and the environment information cannot be acquired.

## Description

### TECHNICAL FIELD

The present disclosure relates to a movement control device, a movement control method, and a movement control program.

### BACKGROUND ART

In recent years, in order to realize safety and comfort of a driver, there has been known a vehicle in which a vehicle itself grasps external environment information around the vehicle, controls traveling of the vehicle in place of the driver, and is equipped with an advanced drive assistance system (ADAS) for automatic driving (for example, see Patent Literature 1).

In an automatic operation method described in Patent Literature 1, a current position (an absolute position) of the vehicle is acquired in real time by receiving a GPS signal while the vehicle is traveling, and when the reliability of the positional accuracy of the vehicle decreases, the absolute position is corrected by matching coordinates and an azimuth angle based on a GPS (a satellite positioning system) with coordinates and an azimuth angle based on an inertial measurement unit (IMU). Traveling of the vehicle is controlled based on current position information of the vehicle.

### CITATION LIST

### PATENT LITERATURE

Patent Literature 1: JP2020-32873A

### SUMMARY OF INVENTION

### TECHNICAL PROBLEM

Incidentally, in the travel control of a moving object as disclosed in Patent Literature 1, there is a demand for a technique for more accurately estimating a current position of the moving object traveling even in an external environment in which GPS signals (GNSS information) cannot be acquired. It has been required to use the technique for travel control of the moving object and to use the technique for a navigation service for guiding a driver or an operator along a route to a destination.

The present disclosure has been made in view of the above problem. An object of the present disclosure is to provide a movement control device, a movement control method, and a movement control program capable of more accurately estimating a current position of a moving object.

### SOLUTION TO PROBLEM

The problem of the present disclosure is solved by a movement control device according to the present disclosure that controls movement of a moving object, the movement control device includes: a self-position estimation unit configured to acquire GNSS information through a GNSS receiver mounted on the moving object and estimate a current position of the moving object based on the GNSS information; an environment information acquisition unit configured to acquire environment information around the moving object through a first sensor mounted on the moving object; and a movement information acquisition unit configured to acquire movement information of the moving object through a second sensor mounted on the moving object, and the self-position estimation unit is configured to estimate a current position of the moving object based on the environment information acquired by the environment information acquisition unit when the GNSS information cannot be acquired, and estimate the current position of the moving object based on the movement information acquired by the movement information acquisition unit when the GNSS information and the environment information cannot be acquired.

As described above, the self-position estimation unit estimates a current position of the moving object based on the GNSS information, estimates a current position of the moving object based on the environment information when the GNSS information cannot be acquired, and estimates a current position of the moving object based on the movement information when the GNSS information and the environment information cannot be acquired. Thus, by performing the estimation, it is possible to realize a movement control device capable of more accurately estimating a current position of a moving object according to a surrounding environment of the moving object to be moved.

In addition, the problem of the present disclosure is also solved by a movement control method according to the present disclosure executed by a computer that controls movement of a moving object, the movement control method includes: by the computer, acquiring GNSS information through a GNSS receiver mounted on the moving object and estimating a current position of the moving object based on the GNSS information; acquiring environment information around the moving object through a first sensor mounted on the moving object; acquiring movement information of the moving object through a second sensor mounted on the moving object; and in a case of estimating the current position of the moving object, estimating a current position of the moving object based on the environment information when the GNSS information cannot be acquired, and estimating a current position of the moving object based on the movement information when the GNSS information and the environment information cannot be acquired.

The problem of the present disclosure is also solved by a movement control program according to the present disclosure that causes a computer serving as a movement control device that controls movement of a moving object to execute: a process of acquiring GNSS information through a GNSS receiver mounted on the moving object and estimating a current position of the moving object based on the GNSS information; a process of acquiring environment information around the moving object through a first sensor mounted on the moving object; and a process of acquiring movement information of the moving object through a second sensor mounted on the moving object, and in the process of estimating a current position of the moving object, when the GNSS information cannot be acquired, a current position of the moving object is estimated based on the environment information, and when the GNSS information and the environment information cannot be acquired, a current position of the moving object is estimated based on the movement information.

### ADVANTAGEOUS EFFECTS OF INVENTION

According to a movement control device, a movement control method, and a movement control program of the present disclosure, it is possible to more accurately estimate a current position of a moving object.

### BRIEF DESCRIPTION OF DRAWINGS

[FIG. 1] FIG. 1 is a diagram illustrating an overall configuration of a travel control system according to an embodiment.
[FIG. 2] FIG. 2 is a diagram illustrating a hardware configuration of a travel control device.
[FIG. 3A] FIG. 3A is a diagram illustrating a hardware configuration of an information transmission device.
[FIG. 3B] FIG. 3B is a diagram illustrating positions of identification marks attached to a target vehicle.
[FIG. 3C] FIG. 3C is a diagram illustrating positions of identification marks attached to the target vehicle.
[FIG. 4] FIG. 4 is a diagram illustrating a hardware configuration of a remote control device.
[FIG. 5] FIG. 5 is a diagram illustrating functions of the travel control device, the information transmission device, and the remote control device.
[FIG. 6] FIG. 6 is a diagram illustrating map information, and is a diagram illustrating a traveling route and a reference point of the vehicle.
[FIG. 7] FIG. 7 is a diagram illustrating how the vehicle travels from a third space to a first space.
[FIG. 8] FIG. 8 is a diagram illustrating a relation between a change mode of self-position estimation of the vehicle and a traveling direction of the vehicle.
[FIG. 9] FIG. 9 is a diagram illustrating map information, and is a diagram illustrating recognition of a reference point and a traveling direction.
[FIG. 10A] FIG. 10A is a diagram illustrating a state where autonomous driving control is performed.
[FIG. 10B] FIG. 10B is a diagram illustrating a state where the autonomous driving control is changed to relative driving control.
[FIG. 10C] FIG. 10C is a diagram illustrating a state where relative driving control is changed to autonomous driving control and a moving object overtakes the target vehicle.
[FIG. 11] FIG. 11 is a diagram illustrating inter-vehicle distance data.
[FIG. 12] FIG. 12 is a diagram illustrating a processing flow of a travel control method (1).
[FIG. 13] FIG. 13 is a diagram illustrating a processing flow of a travel control method (2).
[FIG. 14] FIG. 14 is a diagram illustrating a processing flow of a travel control method (3).
[FIG. 15] FIG. 15 is a diagram illustrating a processing flow of a travel control method (4).

### DESCRIPTION OF EMBODIMENTS

### <Overall Configuration of Travel Control System (Movement Control System)>

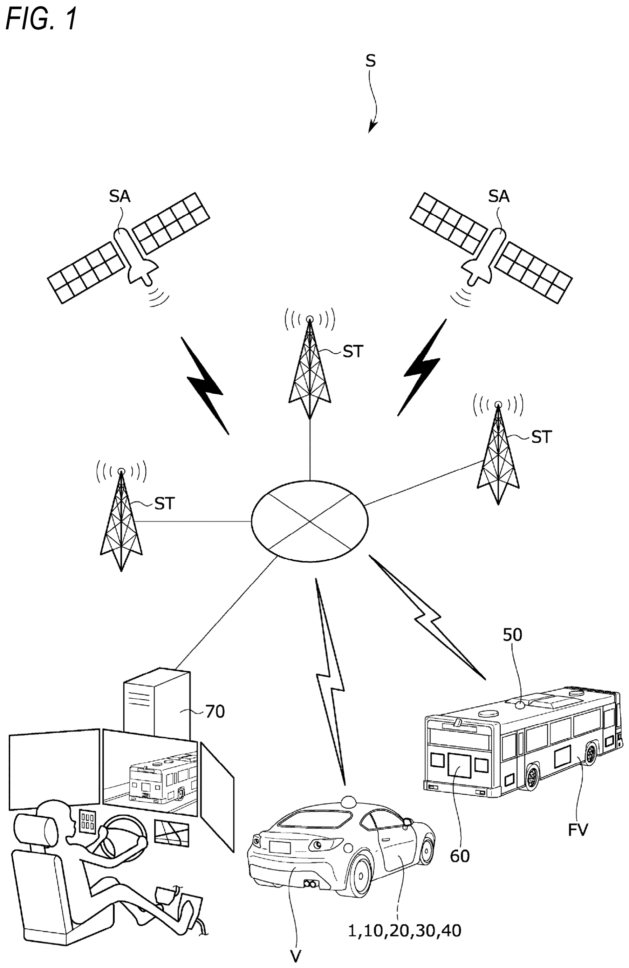

Hereinafter, an embodiment of the present disclosure will be described with reference to FIGS. 1 to 15.

In the present embodiment, a vehicle will be described as an example of the "moving object". The "moving object" may be a vehicle such as a bus or a truck, a railway vehicle such as a train or a steam train, or a vehicle such as an airplane or a ship, in addition to an automobile. Alternatively, the moving object may be an unmanned mobile body such as a drone. In the present disclosure, since a vehicle is described as an example of a "moving object", the movement of a position (a point) is referred to as "traveling" in the following description. However, the movement of the position is not limited to traveling. Depending on a type of the "moving object", it is appropriate to refer to the movement of the position as "navigation" or "flight". Therefore, in the present disclosure, the term meaning the movement of the position is referred to by replacing the traveling with another term as appropriate. In addition, these terms meaning the movement of the position can be collectively referred to as "movement".

As illustrated in FIG. 1, a travel control system S (a movement control system) according to the present embodiment is a system that realizes "automatic driving" of a vehicle V and "follow-up driving" in which the vehicle V is caused to travel while following a predetermined target vehicle FV, and can perform a "mode switching process" for switching between an automatic driving control mode and a follow-up driving control mode. The automatic driving of the vehicle V is driving in which an external environment of the vehicle V is grasped, a scheduled travel route (also referred to as a "scheduled movement route") of the vehicle V is planned instead of a driver, and the vehicle V is controlled along the scheduled travel route to travel (also referred to as "movement").

The "follow-up driving (follow-up driving control)" may be referred to as "relative driving (relative driving control)". In the present embodiment, hereinafter, the "follow-up driving" will be referred to as "relative driving".

In the present embodiment, hereinafter, the "automatic driving control mode (a first driving control mode)" will be simply referred to as an "automatic driving mode". Hereinafter, the "follow-up driving control mode (a second driving control mode)" will be simply referred to as a "relative driving mode".

The "automatic driving (an automatic driving mode)" includes "autonomous driving (an autonomous driving mode)" in which the vehicle V is autonomously traveling by controlling the vehicle V, and "remote driving (a remote driving mode)" in which an operator outside the vehicle V performs a remote operation (an external operation) to cause the vehicle V to travel. That is, "autonomous driving" and "remote driving" are collectively referred to as "automatic driving". Basically, the expression "automatic driving" means autonomous driving.

In the remote driving, the operator may not be a human. The operator of the remote driving may be, for example, artificial intelligence (AI).

The travel control system S according to the present embodiment includes, in addition to the "automatic driving" and the "relative driving" described above, "manual driving (a manual driving mode)" in which a driver rides on the vehicle V and actually performs a driving operation. In the mode switching process, the "manual driving mode" and the "automatic driving mode" can be switched. In the mode switching process described above, the "manual driving mode" and the "relative driving mode" can be switched.

The "vehicle V" is a vehicle on which a travel control device 1 to be described later is mounted and that has a function of performing automatic driving and a function of performing relative driving.

The "target vehicle FV" is a vehicle on which a vehicle information transmission device 50 to be described later is mounted and which travels (moves) in a state where vehicle information (specifically, vehicle identification information, current position information, and scheduled travel route information) can be transmitted through communication.

The target vehicle FV is not limited to a preceding vehicle that travels (moves) ahead of the vehicle V, and may be a parallel traveling vehicle that travels parallel to the vehicle V. Alternatively, the target vehicle FV may be a following vehicle that travels behind the vehicle V.

The target vehicle FV may be, for example, a bus, a taxi, a truck, or the like that travels along a preset scheduled travel route, or a circulation bus or the like that travels along a predetermined circulation route. Of course, the target vehicle FV may be a vehicle other than the above-described type of vehicle, for example, a general vehicle.

### <Hardware Configuration of Travel Control System (Movement Control System)>

As illustrated in FIGS. 1 to 4, the travel control system S includes the travel control device 1, an in-vehicle sensor 10, an in-vehicle locator 20, an in-vehicle ECU 30, and an in-vehicle communication device 40. The travel control device 1 is a movement control device, is mounted on the vehicle V, and is configured to comprehensively control traveling of the vehicle V. The in-vehicle sensor 10 is configured to detect the external environment around the vehicle V. The in-vehicle locator 20 is configured to receive GNSS signals from artificial satellites SA and reference stations ST and measure a current position of the vehicle V. The in-vehicle ECU 30 is configured to control steering, acceleration, deceleration, and the like of the vehicle V. The in-vehicle communication device 40 is configured to communicate with an external device.

The travel control system S includes a vehicle information transmission device 50 and identification marks 60. The vehicle information transmission device 50 is mounted on the target vehicle FV, is connected to the travel control device 1, and is configured to transmit target vehicle information including position information of the target vehicle FV through communication. The identification marks 60 are attached to the target vehicle FV, and vehicle identification information of the target vehicle FV is embedded in the identification marks 60.

The vehicle V may further include the vehicle information transmission device 50 included in the target vehicle FV and the identification marks 60. The target vehicle FV may further include the in-vehicle sensor 10, the in-vehicle locator 20, the in-vehicle ECU 30, and the in-vehicle communication device 40 included in the vehicle V. That is, the vehicle V and the target vehicle FV may have the same configuration. Accordingly, the vehicle V and the target vehicle FV can be replaced with each other to configure the travel control system S.

Further, the travel control system S includes the remote control device 70 that is installed outside the vehicle V and operates (remotely controls) traveling of the vehicle V through communication with the travel control device 1.

The travel control device 1, the vehicle information transmission device 50, and the remote control device 70 may directly communicate with each other.

### <Travel Control Device (Movement Control Device)>

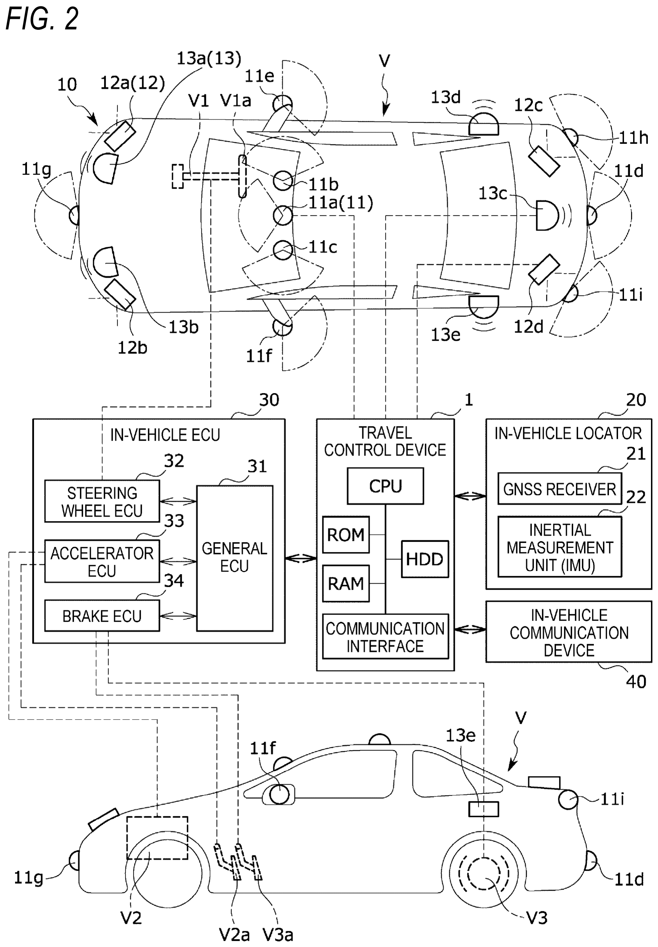

As illustrated in FIG. 2, the travel control device 1 is a computer that is connected to the in-vehicle sensor 10, the in-vehicle locator 20, the in-vehicle ECU 30, and the in-vehicle communication device 40 via an in-vehicle network (CAN).

Specifically, the travel control device 1 is a computer including a data calculation and control processing device, a storage device, and a communication interface. The calculation and control processing device is, for example, a CPU (a processor). The storage device is, for example, a ROM, a RAM, and an HDD (SSD). The communication interface is configured to transmit and receive information data via the in-vehicle network.

The storage device (a memory) of the travel control device 1 stores a travel control program in addition to a main program that performs necessary functions as a computer. When these programs are executed by the CPU (a processor), the functions of the travel control device 1 are exhibited. Alternatively, a main program and a travel control program may be executed by a semiconductor integrated circuit on which the CPU is mounted or a field-programmable gate array (FPGA).

The in-vehicle ECU 30 (a general ECU 31), the vehicle information transmission device 50, and the remote control device 70 are also computers having the same hardware configuration as the travel control device 1.

### <<Autonomous Driving, Relative Driving, and Remote Driving>>

The travel control device 1 controls "autonomous traveling" of the vehicle V to execute "autonomous driving". Specifically, the travel control device 1 controls the "autonomous travel" of the vehicle V by controlling the in-vehicle ECU 30 (the general ECU 31) based on external environment information obtained from the in-vehicle sensor 10, position information and traveling information of the vehicle V obtained from the in-vehicle locator 20, and vehicle information obtained from the in-vehicle ECU 30.

Further, the travel control device 1 controls "relative traveling (follow-up traveling)" of the vehicle V with respect to the target vehicle FV in order to execute "relative driving (follow-up driving)". Specifically, the travel control device 1 performs wireless communication with the vehicle information transmission device 50 via the in-vehicle communication device 40, and receives target vehicle information including the position information of the predetermined target vehicle FV. The travel control device 1 controls the in-vehicle ECU 30 (the general ECU 31) based on the external environment information, the position information of the vehicle V, and the target vehicle information including the position information of the target vehicle FV, thereby controlling the "relative traveling (follow-up traveling)" of the vehicle V with respect to the target vehicle FV.

In addition, in order to perform the "remote driving", the travel control device 1 performs wireless communication with the remote control device 70 through the in-vehicle communication device 40, and transmits the external environment information, the position information and the traveling information of the vehicle V, and the vehicle information to the remote control device 70. The remote control device 70 receives these pieces of information. In addition to displaying the content based on the received external environment information and the position information of the vehicle V on monitors 71 (a navigation monitor 72), the remote control device 70 can notify the operator of these pieces of information by a user.

More specifically, the vehicle travel control device 1 is newly mounted on the vehicle V on which an "autonomous driving function (the in-vehicle sensor 10, the in-vehicle locator 20, and the in-vehicle ECU 30)" is mounted in advance, thereby providing the vehicle V with an improvement in the performance of the existing "autonomous driving function" and newly providing a "relative driving function" and a "remote driving function" to the vehicle V.

### <<Travel Control Using Map Information>>

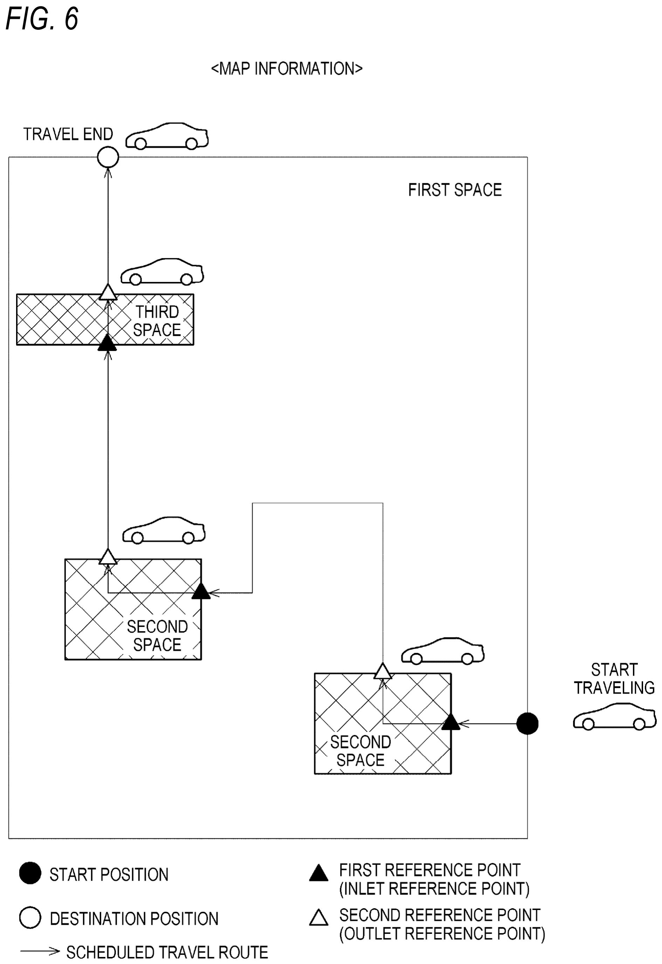

Travel control using map information will be described with reference to FIG. 6. FIG. 6 is a diagram illustrating map information, and is a diagram illustrating a traveling route and a reference point of the vehicle.

The travel control device 1 performs travel control (also referred to as "movement control") of the vehicle V to execute "autonomous driving", "relative driving", and "remote driving". Specifically, the travel control device 1 performs self-position estimation using the "map information" illustrated in FIG. 6, and performs travel control of the vehicle V while accurately estimating position information of the vehicle V (hereinafter, also referred to as a "current position" or a "current point").

Specifically, the travel control device 1 uses "map information" including information of a "reference point (a first reference point and a second reference point)" to recognize a "reached space (a first space, a second space, a third space)" based on the arrival at the reference point. The travel control device 1 that has recognized that the vehicle V has reached the reference point performs suitable self-position estimation according to the space, and performs an estimation process of the position information of the vehicle V and travel control of the vehicle V. Of course, the travel control device 1 may perform travel control of the vehicle V while estimating the position information of the vehicle V.

The "space (the first space, the second space, and the third space)" is divided based on a difference in a self-position estimation method in a ground space (may be an underground space), and the self-position estimation method by the vehicle V (the travel control device 1) is different due to the space being different. The "space" may be referred to as a "region", a "specific range", or the like.

The "first space" is a space in a state in which, when the vehicle V is present in the first space, the vehicle V (the travel control device 1) can acquire the GNSS information through external communication and can estimate the self-position based on the GNSS information.

The state in which the vehicle V can estimate the self-position based on the GNSS information is a state in which, for example, when a reception sensitivity level of the GNSS information (the GNSS signal) is measured, the sensitivity level is at a certain level (a certain level or more).

The "first space" may be referred to as, for example, "outdoors (an outdoor space)", or may be referred to as the vehicle V being present (positioned) outdoors (an outdoor space).

The "second space" is a space in a state in which, when the vehicle V is present in the second space, the vehicle V (the travel control device 1) does not perform external communication, the vehicle can acquire external environment information alone, and the vehicle V can estimate the self-position based on the environment information. In other words, the "second space" is a space in a state in which the vehicle V cannot estimate the self-position based on the GNSS information (a state in which the reception sensitivity level of the GNSS signal is less than a certain level).

The state in which the vehicle V can estimate the self-position based on the environment information is, for example, a state in which the vehicle V (the in-vehicle sensor 10) can detect the external environment around the vehicle V and perform three-dimensional spatial mapping.

The "second space" and the "third space" may be referred to as, for example, "indoors (an indoor space)", or may be referred to as the vehicle V being present indoors (an indoor space).

The "third space" is a space in a state in which, when the vehicle V is present in the third space, the vehicle V (the travel control device 1) does not perform external communication, the vehicle alone does not acquire external environment information, the vehicle acquires the traveling information of the vehicle V, and the vehicle estimates the self-position based on the traveling information. In other words, the "third space" is a space in a state in which the vehicle V cannot estimate the self-position based on the GNSS information (a state in which external communication cannot be performed) and in a state in which the vehicle V cannot acquire external environment information at a certain level or higher.

The state in which the vehicle V cannot perform the external communication and cannot acquire the external environment information is, for example, a state in which the vehicle V is located inside a tunnel or under an elevated road, a state immediately after the vehicle V moves from the "first space" to the "second space", or a state immediately after the vehicle V moves from the "second space" to the "first space". In this state, the vehicle V acquires the traveling information of the vehicle V by an inertial measurement unit 22.

When the inertial measurement unit 22 cannot acquire the traveling information of the vehicle V while the state in which the vehicle V cannot perform the external communication and cannot acquire the external environment information continues for a certain time or more, the vehicle V (the travel control device 1) recognizes that a failure or a local error (a fatal error) of the vehicle V has occurred, and ends a traveling control process.

"When the vehicle V is present in a space" in the above description indicates when the position information (the current position) of the vehicle belongs to the space (the region). In a case where the position information of the vehicle is represented by "vehicle position range information", "when the vehicle V is present in a space" indicates when at least a part of the vehicle position range information belongs to the space.

Further, "when the vehicle V is not present in a space" indicates when the position information (the current position) of the vehicle does not belong to the space (the region). In the case where the position information of the vehicle is represented by "vehicle position range information", "when the vehicle V is not present in a space" indicates when all of the vehicle position range information does not belong to the space.

The vehicle V (the travel control device 1) recognizes that the map information (the first space, the second space, and the third space) continues. Therefore, when the space is switched by the traveling of the vehicle V, the space is not searched from all the map information stored in the vehicle V.

In the "map information", as illustrated in FIG. 6, the second space and the third space are present in the first space. Therefore, even when the vehicle V is traveling "indoors (second space, third space)", the coordinates (GNSS based on the GNSS information can be grasped based on the "reference point".

When the vehicle V is in a state immediately after moving from the "first space" to the "second space", the vehicle V switches from the self-position estimation based on the GNSS information to the self-position estimation based on the environment information. However, a slight time lag occurs at the timing of the switching (the vehicle V gets lost). Similarly, a time lag occurs in a state immediately after the vehicle V moves from the "second space" to the "first space". Therefore, at the timing of switching from the "first space" to the "second space" or the timing of switching from the "second space" to the "first space", the vehicle V (the travel control device 1) temporarily performs self-position estimation based on the traveling information of the vehicle V, and controls the traveling of the vehicle V. In the control of the traveling of the vehicle V, it is desirable that the self-position estimation can be performed more accurately.

Therefore, as illustrated in FIG. 6, the travel control device 1 recognizes the "space (the first space, the second space, and the third space)" based on reaching the reference point using the "map information" including the information of the "reference point (the first reference point and the second reference point)" described above, and performs the self-position estimation according to the space.

In a case of performing the self-position estimation after the switching using the "reference point", the travel control device 1 can improve the self-position estimation accuracy and a search speed by limiting a search range of the "indoors (the second space and the third space)" based on a position and a traveling direction before the switching of the "reference point". In other words, the travel control device 1 does not search for all "indoors".

The "reference point" indicates a position (an entrance and exit position, a reference position) when the vehicle V enters and exits different spaces between the "first space", the "second space", and the "third space", and a self-position estimation method by the vehicle V (the travel control device 1) is switched when the vehicle V reaches the reference point. The "reference point" is recorded in the map information illustrated in FIG. 6.

The "first reference point" is also referred to as an inlet reference point and is a position (a reference position) indicating an "entrance of the second space" when the vehicle V traveling in the first space moves from the first space to the second space.

In other words, the "first reference point" indicates a position (a switching position) changed from a state (a first estimation state) in which the traveling vehicle V (the travel control device 1) estimates the current position based on the GNSS information to a state (a second estimation state) in which the vehicle V estimates the current position based on the environment information.

A position (reference position) indicating an "inlet of the third space" when the vehicle V moves from the first space to the third space or a position (a reference position) indicating an "inlet of the third space" when the vehicle V moves from the second space to the third space is also referred to as the "first reference point (the inlet reference point)".

The "second reference point" is also referred to as an outlet reference point and is a position (a reference position) indicating an "outlet of the second space" when the vehicle V traveling in the second space moves from the second space to the first space.

In other words, the "second reference point" indicates a position (a switching position) changed from the state (the second estimation state) in which the traveling vehicle V (the travel control device 1) estimates the current position based on the environment information to the state (the first estimation state) in which the vehicle V estimates the current position based on the GNSS information.

A position (a reference position) indicating an "exit of the third space" when the vehicle V moves from the third space to the first space or a position (a reference position) indicating an "exit of the third space" when the vehicle V moves from the third space to the second space is also referred to as the "second reference point (the outlet reference point)".

By using the map information in which the reference point is recorded, the travel control device 1 can switch the self-position estimation method (a measurement method) of the vehicle V based on the arrival at the reference point, or can switch the self-position estimation method of the vehicle V in advance based on the arrival at the reference point.

In this way, the travel control device 1 can smoothly control the traveling of the vehicle V at a switching timing of the self-position estimation. That is, by using the map information in which the reference point is recorded, the current position of the vehicle V can be estimated more accurately by switching the self-position estimation method more timely.

The "map information" includes map information, space information including information on the first space, the second space, and the third space, and information on the reference point including information on the first reference point and the second reference point. The "map information" is created and updated by the travel control system S (the travel control device 1).

Specifically, when the vehicle V is traveling along a predetermined scheduled travel route, the travel control device 1 specifies, as the first reference point, a position changed from a state (first estimation state) in which the current position of the vehicle V is estimated based on the GNSS information to a state (second estimation state) in which the current position of the vehicle V is estimated based on the environment information (specification of the second reference point is also specified similarly to the first reference point). The information on the specified first reference point or information on the second reference point is recorded, and this information is reflected in the map information. In this way, the information of the reference point is updated in the map information. Further, by reflecting the map information, the space information is also updated.

The travel control device 1 may store environment information in the vicinity of the "reference point" (within a certain distance from the "reference point") and vehicle information immediately before reaching the "reference point" (vehicle speed information, acceleration or deceleration information such as roll, pitch, and yaw, and inclination information), and improve the estimation accuracy of the "reference point" based on these pieces of information.

The map information may be created by collecting and aggregating information on the reference point and space information recorded by a plurality of vehicles V (the travel control device 1) managed by the travel control system S, and may be updated.

Each vehicle V (the travel control device 1) can more accurately estimate the current position of the traveling vehicle V by using the updated map information.

In this way, the "map information" is used to estimate the current position of the vehicle V. The "map information" is used to specify an actual traveling route on which the vehicle V has actually traveled.

As illustrated in FIG. 6, a start position and a destination position (a goal position) of the vehicle V and a scheduled travel route of the vehicle V are set in the "map information".

In the "map information" illustrated in FIG. 6, information on the "first space", the "second space", and the "third space" is also set, but the information on the space is used as reference information. That is, the travel control device 1 may recognize the movement to different spaces based on a position of the reference point or a position where the self-position estimation method is switched.

### <Configuration Other Than Travel Control Device>

The in-vehicle sensor 10 detects moving objects (other vehicles, pedestrians, and the like), various structures, road shapes, and the like around the vehicle V as the external environment around the vehicle V. Specifically, the in-vehicle sensor 10 includes a plurality of imaging devices 11, a plurality of radars 12, and a plurality of LIDARs 13.

The in-vehicle sensor 10 is also referred to as an external sensor. The in-vehicle sensor 10 corresponds to a "first sensor" that detects surrounding environment information on the vehicle V.

The in-vehicle sensor 10 may further include a detection sensor other than those described above. Alternatively, the in-vehicle sensor 10 may include only the imaging devices 11, only the radars 12, or only the LIDARs 13 among the above-described detection sensors.

Each of the imaging devices 11 is a small imaging camera (a wide-angle camera) that images an external video around the vehicle V. The imaging device 11 creates external video data and transmits the external video data to the travel control device 1 in order to execute a "sensing function" for traveling control of the vehicle V and a "monitoring function" for a driver (an operator).

The plurality of imaging devices 11 are mounted on the vehicle V. As illustrated in FIG. 2, the imaging devices 11 includes a first imaging device 11a to a sixth imaging device 11f as main cameras. The first imaging device 11a is an imaging device that is attached to a windshield of the vehicle V and images the front of the vehicle V. The second imaging device 11b is an imaging device that is attached to the windshield of the vehicle V and images a right side of the vehicle V. The third imaging device 11c is an imaging device that is attached to the windshield of the vehicle V and images a left side of the vehicle V. The fourth imaging device 11d is an imaging device that is attached to a back bumper of the vehicle V and images the rear of the vehicle V. The fifth imaging device 11e is an imaging device that is attached to a right mirror of the vehicle V and images an obliquely right rear side of the vehicle V. The sixth imaging device 11f is an imaging device that is attached to a left mirror of the vehicle V and images an obliquely left rear side of the vehicle V.

The imaging devices 11 include a seventh imaging device 11g to a ninth imaging device 11i as sub-cameras. The seventh imaging device 11g is an imaging device that is attached to a front bumper of the vehicle V and images the front of the vehicle V. The eighth imaging device 11h is an imaging device that is attached to the periphery of a right backlight of the vehicle V and images an obliquely right rear side of the vehicle V. The ninth imaging device 11i is an imaging device that is attached to the periphery of a left backlight of the vehicle V and images an obliquely left rear side of the vehicle V.

In the present embodiment, a total of nine imaging devices 11 are attached to predetermined positions of the vehicle V. However, the number and attachment positions of the imaging devices 11 can be changed according to a type and shape of the vehicle V. Similarly, the number and attachment positions of the radars 12 and the LIDARs 13 in the vehicle V can be changed according to the type and shape of the vehicle V.

Each of the radars 12 is a millimeter wave radar that detects a target object (measures a position and speed of the target object) by emitting radio waves while continuously changing an emission direction and receiving reflected waves from the target object and performs three-dimensional spatial imaging. As compared with the imaging devices 11 and the LIDARs 13, radars 12 can accurately detect an environmental situation such as night or bad weather with poor visibility.

The radars 12 acquire detection result data (detection signals) of the target object and transmit the detection result data to the travel control device 1.

A plurality of radars 12 are mounted on the vehicle V. As illustrated in FIG. 2, the radars 12 include a first radar 12a to a fourth radar 12d. The first radar 12a is attached around a right front light of the vehicle V. The second radar 12b is attached around a left front light of the vehicle V. The third radar 12c is attached around a right backlight of the vehicle V. The fourth radar 12d is attached around a left backlight of the vehicle V.

The radar 12 is not particularly limited to a millimeter wave radar. The radar 12 may be, for example, a radar such as a laser radar or an ultrasonic sensor.

The LIDAR 13 is also referred to as "Lidar". Each of the LIDARs 13 is a remote sensor that measures a distance to the target object and performs three-dimensional spatial imaging (mapping) by emitting laser light and receiving reflected light from a target object (for example, a structure, a pedestrian, or the like). As compared with the imaging device 11 and the radar 12, the LIDAR 13 can measure a distance to the target object in the vicinity in units of several centimeters.

The LIDAR 13 acquires distance measurement data obtained by measuring the distance to the target object and transmits the distance measurement data to the travel control device 1.

The plurality of LIDARs 13 are mounted on the vehicle V. As illustrated in FIG. 2, the LIDARs 13 includes a first LIDAR 13a to a fifth LIDAR 13e. The first LIDAR 13a is attached around the right front light of the vehicle V. The second LIDAR 13b is attached around the left front light of the vehicle V. The third LIDAR 13c is attached to a back bumper of the vehicle V. The fourth LIDAR 13d is attached around the right backlight of the vehicle V. The fifth LIDAR 13e is attached around the left backlight of the vehicle V.

The in-vehicle locator 20 measures the current position of the vehicle V using a sanitary positioning system using the artificial satellites SA and the reference stations ST. In addition, the in-vehicle locator 20 measures traveling information (acceleration, angular velocity, and the like) of the vehicle V to improve measurement accuracy of the current position of the vehicle V. When a satellite positioning system cannot be used (when external communication cannot be performed), the in-vehicle locator 20 measures the current position of the vehicle V based on the traveling information of the vehicle V.

Specifically, the in-vehicle locator 20 includes a GNSS receiver 21 that receives GNSS radio waves (GPS radio waves) from a plurality of artificial satellites SA, and the inertial measurement unit 22 that measures the traveling information (the acceleration and the angular velocity) of the vehicle V.

The in-vehicle locator 20 may further include an encoder (a wheel encoder) that measures traveling information such as a rotation speed, a rotation angle, and the like of a wheel of the vehicle V.

Specifically, the GNSS receiver 21 is an RTK- GNSS receiver. The GNSS receiver 21 receives GNSS radio waves from the plurality of (specifically, four) artificial satellites SA, and generates "GNSS information" necessary for point positioning. Further, "GNSS correction information" required for relative positioning is received from the external reference stations ST.

The reference station ST is a fixed reference station set at a known point. The reference station ST receives GNSS radio waves from the plurality of artificial satellites SA, generates "GNSS correction information", and transmits the GNSS correction information to the GNSS receiver 21.

The "GNSS information" is distance information between the plurality of artificial satellites SA and the GNSS receiver 21.

The "GNSS correction information" is distance information in which a measurement error of the "GNSS information" is corrected when the reference stations ST located at known points receive GNSS radio waves and the reference stations ST and the GNSS receiver 21 communicate with each other.

The inertial measurement unit 22 is also referred to as an IMU, and includes a three-axis gyro sensor (an angular velocity meter) and a three-axis acceleration sensor (an accelerometer). The inertial measurement unit 22 measures a three-dimensional angular velocity and acceleration of the vehicle V and transmits traveling information (information on the acceleration and the angular velocity) of the vehicle V to the travel control device 1.

The inertial measurement unit 22 (IMU) is also referred to as an internal sensor. The inertial measurement unit 22 (IMU) corresponds to a "second sensor" that measures the traveling information of the vehicle V.

The travel control device 1 can measure the current position of the vehicle V in a smaller error range by combining the GNSS information (the GNSS correction information) received from the GNSS receiver 21 and the traveling information of the vehicle V received from the inertial measurement unit 22 and performing positioning.

When the GNSS information cannot be used (when external communication cannot be performed), the travel control device 1 measures the current position of the vehicle V based on the traveling information of the vehicle V. At this time, when the in-vehicle locator 20 further includes an encoder, the travel control device 1 may measure the current position of the vehicle V by combining the traveling information of the vehicle V received from the inertial measurement unit 22 and the traveling information of the vehicle V received from the encoder.

The in-vehicle ECU 30 is, for example, an ECU for ADAS. The in-vehicle ECU 30 includes the general ECU 31 as an upper layer, and a steering wheel ECU 32, an accelerator ECU 33, and a brake ECU 34 as a lower layer. The general ECU 31 is connected to the travel control device 1 and transmits and receives various data. The steering wheel ECU 32 is connected to the general ECU 31 as an upper layer, and finely controls steering, acceleration, deceleration, and the like of the vehicle V. The in-vehicle ECU 30 including the general ECU 31 as an upper layer and the steering wheel ECU 32 as a lower layer forms a hierarchical structure.

The steering wheel ECU 32 is also referred to as a driving support computer. The accelerator ECU 33 and the brake ECU 34 are also referred to as a power management control unit.

The number and functions of the individual ECUs connected to the general ECU 31 are not particularly limited to the three ECUs 32 to 34, and other ECUs may be further provided in the same layer as those of the ECUs.

The steering wheel ECU 32 controls an electric power steering V1 of the vehicle V in response to an instruction from the general ECU 31, and mainly controls a traveling direction of the vehicle V.

The electric power steering V1 includes a steering mechanism that steers front wheels of the vehicle V. For example, in the manual driving mode, the front wheels of the vehicle V are steered by a steering operation of a steering wheel V1a by the driver.

The accelerator ECU 33 controls an electric throttle V2 of the vehicle V in response to an instruction from the general ECU 31, and mainly controls the acceleration and deceleration of the vehicle V.

The electric throttle V2 includes a driving mechanism that outputs a driving force for rotating driving wheels of the vehicle V. For example, in the manual driving mode, an output of an engine is adjusted in accordance with an accelerator operation of the accelerator pedal V2a by the driver.

The brake ECU 34 controls an electromagnetic brake device V3 of the vehicle V in response to an instruction from the general ECU 31, and mainly controls the deceleration and stop of the vehicle V.

The electromagnetic brake device V3 includes a mechanism that is attached to each wheel of the vehicle V and decelerates or stops the vehicle V by applying resistance to the rotation of the wheel. For example, in the manual driving mode, an operation of the electromagnetic brake device V3 is adjusted in accordance with a brake operation of the brake pedal V3a by the driver.

The in-vehicle communication device 40 is a device that performs information communication with the vehicle information transmission device 50 mounted on the target vehicle FV, the remote control device 70 installed outside, and an external server (not illustrated) via a network.

Specifically, the in-vehicle communication device 40 receives, as information required for "relative driving", the target vehicle information including the position information of the target vehicle FV acquired by the vehicle information transmission device 50, and transmits the target vehicle information to the travel control device 1.

In addition, the in-vehicle communication device 40 transmits external video information acquired by the vehicle travel control device 1 and the current position information to the remote control device 70 as information required for the "remote driving". The in-vehicle communication device 40 receives driving operation information of the vehicle V from the remote control device 70 that receives the user input by the operator, and transmits the driving operation information to the travel control device 1.

In addition, the in-vehicle communication device 40 performs information communication with an external server (not illustrated) and receives information. For example, the in-vehicle communication device 40 can also receive the latest traffic information, weather information, and the like from an external server.

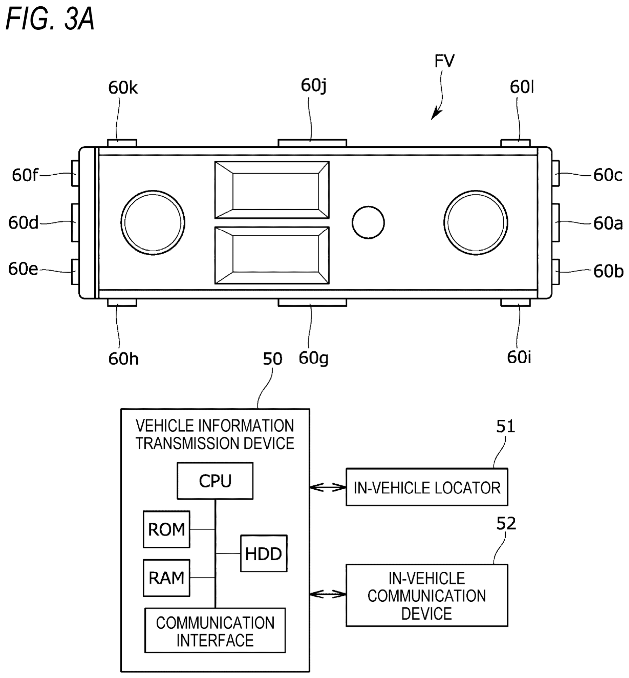

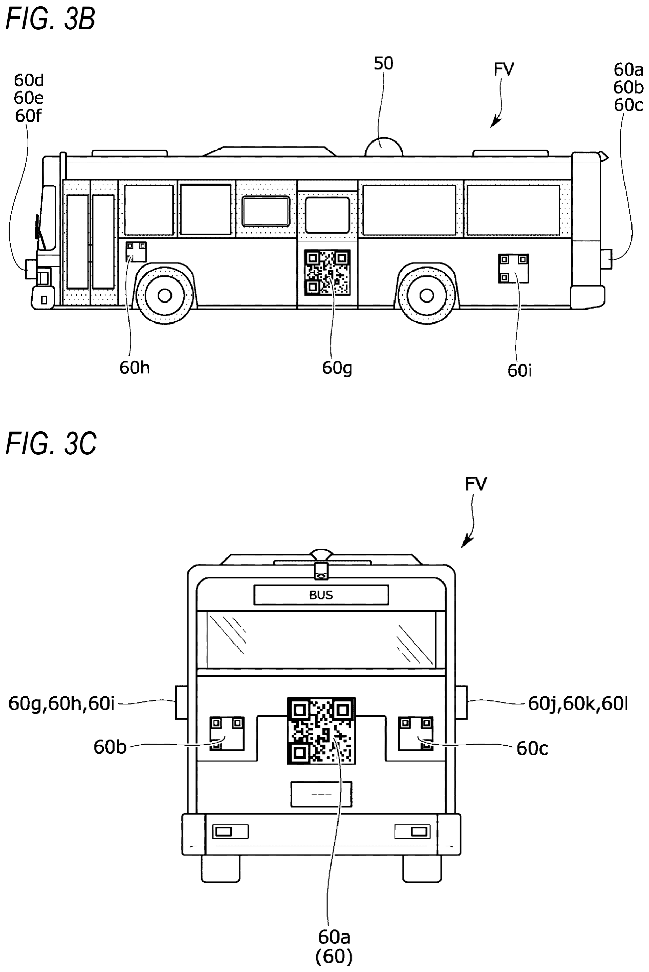

As illustrated in FIGS. 1 and 3A, the vehicle information transmission device 50 is a computer that is mounted on the target vehicle FV, acquires target vehicle information including current position information of the target vehicle FV, and transmits the target vehicle information to the vehicle V. As illustrated in FIG. 3A, the vehicle information transmission device 50 includes an in-vehicle locator 51 and an in-vehicle communication device 52 as specific hardware configurations.

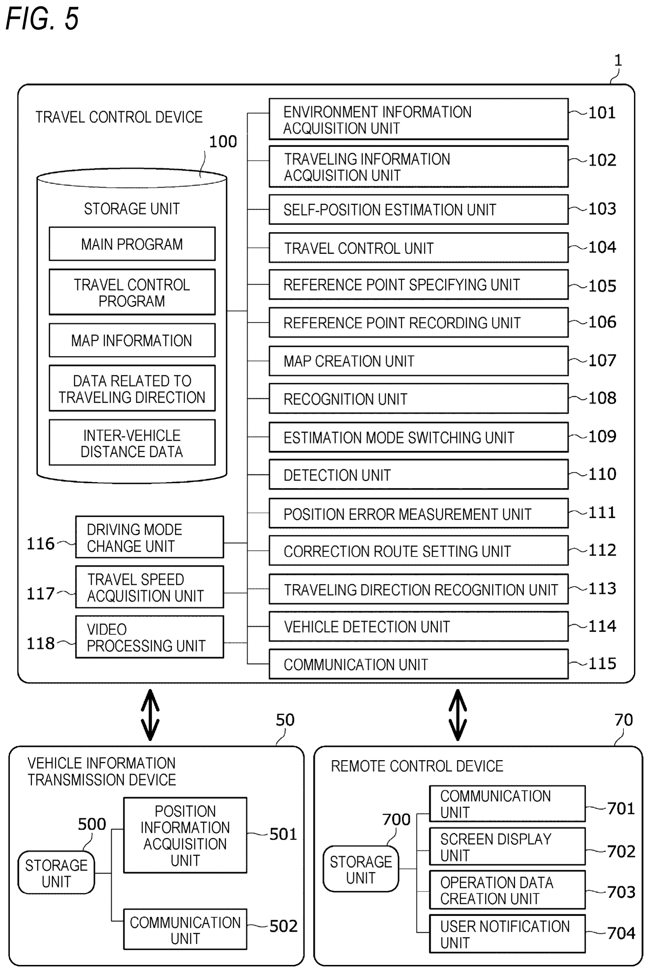

The "target vehicle information" is information including position information (real-time position information) of the target vehicle FV, scheduled travel route information, and vehicle identification information. The "target vehicle information" is stored in the storage unit 500 of the vehicle information transmission device 50 illustrated in FIG. 5.

The "vehicle identification information" is a vehicle ID for identifying the target vehicle FV, and information such as a vehicle type name, a model, and a frame number is associated with each vehicle ID and stored in the storage unit 500. The vehicle identification information is stored in the storage unit 500. The vehicle identification information is embedded in the identification marks 60 attached to the target vehicle FV.

Similarly to the in-vehicle locator 20 described above, the in-vehicle locator 51 includes a GNSS receiver 51a and an inertial measurement unit 51b. The GNSS receiver 51a receives GNSS radio waves (GPS radio waves) from the plurality of artificial satellites SA. The inertial measurement unit 51b measures the acceleration and the angular velocity of the target vehicle FV. The in-vehicle locator 51 may further include an encoder.

The in-vehicle communication device 52 is a device that performs information communication with the travel control device 1 mounted on the host vehicle V via a network.

Specifically, the in-vehicle communication device 52 transmits, as information required for the "relative driving" of the vehicle V, the target vehicle information to the travel control device 1 (the in-vehicle communication device 40) at all times or as necessary.

Specifically, the in-vehicle communication device 52 can transmit the position information of the target vehicle FV in the target vehicle information in real time.

The expression "transmit in real time" includes a case where the position information is transmitted at the same timing as a change in the position information of the target vehicle FV, and a case where the position information is transmitted in a state where some time lag occurs.

As illustrated in FIGS. 3A to 3C, the identification marks 60 are two-dimensional barcodes in which vehicle identification information for identifying the target vehicle FV are embedded (stored). A plurality of identification marks 60 are attached to an outer surface of the target vehicle FV. In each of the identification marks 60, information capable of specifying a scheduled travel route of the target vehicle FV may be embedded together.

The identification marks 60 are recognized by the imaging device 11 of the vehicle V.

Specifically, when the identification marks 60 are recognized in a video captured by the imaging device 11, the imaging device 11 acquires, as recognition results, vehicle identification information of the target vehicle FV embedded in the identification marks 60, information capable of specifying a scheduled travel route, and the like. The travel control device 1 can acquire the vehicle identification information of the target vehicle FV from the imaging device 11 through network communication in a predetermined communication method or via the in-vehicle network (CAN).

In the above embodiment, the travel control device 1 can acquire the vehicle identification information from the vehicle information transmission device 50 and the identification marks 60. However, the travel control device 1 may acquire the vehicle identification information from at least one of the vehicle information transmission device 50 and the identification marks 60.

As illustrated in FIGS. 3A to 3C, the identification marks 60 include a first identification mark 60a to a sixth identification mark 60f. The first identification mark 60a is attached to a central portion of a rear surface of the target vehicle FV in a width direction of the vehicle. The second identification mark 60b is attached to a left end of the rear surface of the target vehicle FV in the width direction of the vehicle. The third identification mark 60c is attached to a right end of the rear surface of the target vehicle FV in the width direction of the vehicle. The fourth identification mark 60d is attached to a central portion of a front surface of the target vehicle FV in the width direction of the vehicle. The fifth identification mark 60e is attached to a left end of the front surface of the target vehicle FV in the width direction of the vehicle. The sixth identification mark 60f is attached to a right end of the front surface of the target vehicle FV in the width direction of the vehicle.

The identification marks 60 include a seventh identification mark 60g to a twelfth identification mark 601. The seventh identification mark 60g is attached to a central portion of a left side surface of the target vehicle FV in a front-rear direction of the vehicle. The eighth identification mark 60h is attached to a front end of the left side surface of the target vehicle FV in the front-rear direction of the vehicle. The ninth identification mark 60i is attached to a rear end of the left side surface of the target vehicle FV in the front-rear direction of the vehicle. The tenth identification mark 60j is attached to a central portion of a right side surface of the target vehicle FV in the front-rear direction of the vehicle. The eleventh identification mark 60k is attached to a front end of the right side surface of the target vehicle FV in the front-rear direction of the vehicle. The twelfth identification mark 601 is attached to a rear end of the right side surface of the target vehicle FV in the front-rear direction of the vehicle.

The vehicle identification information of the target vehicle FV is embedded in each of the identification marks 60a to 601. In addition, mark position information is embedded in the identification marks 60a to 601. The mark position information is information indicating a position (vehicle body position) where each identification mark 60 is attached to the target vehicle FV.

Therefore, when any one of the identification marks 60 among the identification marks 60a to 601 is recognized by the imaging device 11 of the vehicle V, the travel control device 1 can acquire the vehicle identification information of the target vehicle FV and detect the target vehicle FV.

For example, when the identification mark 60a and the identification mark 60c among the identification marks 60a to 601 are recognized, or when only the identification mark 60c is recognized, the travel control device 1 can detect that the vehicle V is at a rear position of the target vehicle FV and further at a right position of the target vehicle FV based on the mark position information.

In particular, the travel control device 1 can accurately grasp a position (relative position) of the target vehicle FV relative to the vehicle V based on surrounding environment information of the vehicle V, position information of the vehicle V, traveling information of the vehicle V, position information of the target vehicle FV, and mark position information acquired from the identification mark 60.

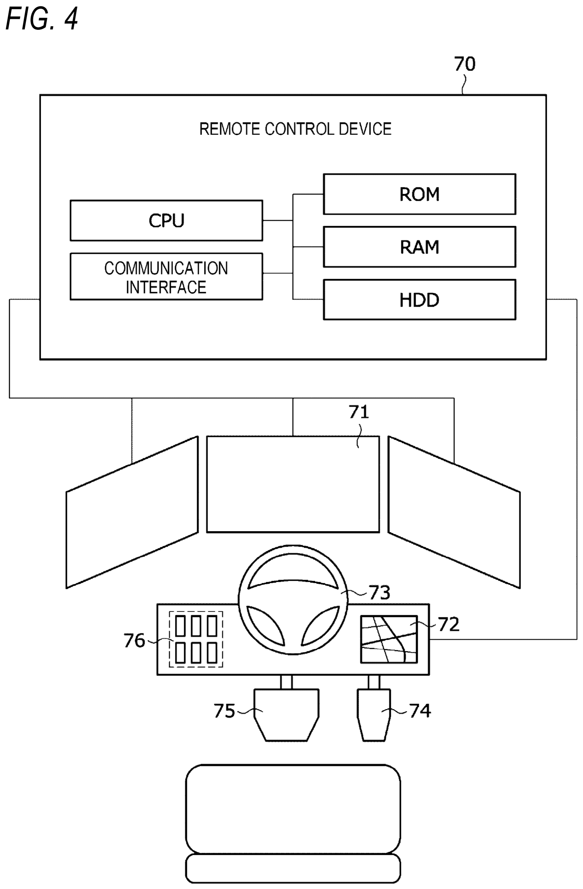

As illustrated in FIGS. 1 and 4, the remote control device 70 is a computer that is operated by the operator and performs "remote driving" of the vehicle V. As a specific hardware configuration, the remote control device 70 includes a plurality of monitors 71, the navigation monitor 72, a steering wheel 73, an accelerator pedal 74, a brake pedal 75, and a plurality of operation switches 76.

The remote control device 70 may further include components such as a speaker, a microphone, and a shift lever.

The monitors 71 and the navigation monitor 72 are display units that output visual information for performing "remote driving". The monitors 71 display a synthesized video (a synthesized image) obtained by synthesizing the external videos of the vehicle V imaged by the plurality of imaging devices 11a to 11i based on predetermined layout information.

The predetermined layout information is, for example, a display mode of a layout that does not create a blind spot for the operator and is easy for the operator to operate. A plurality of pieces of layout information including THE predetermined layout information may be associated with each other by a layout ID (layout identification information) and stored in a storage unit 100 of the travel control device 1. In a case where the layout ID is stored in the storage unit 100, when a predetermined change operation of the layout information is performed using the operation switch 76 or the like, the changed layout ID is transmitted from the remote control device 70 to the travel control device 1.

The vehicle travel control device 1 generates a synthesized video obtained by synthesizing the external videos based on the layout information corresponding to the changed layout ID, and transmits the synthesized video to the remote control device 70. With this transmission, the video displayed immediately before is changed to the synthesized video and displayed on the monitors 71.

The steering wheel 73 is an operation unit that is operated by an operator and is used to adjust a steering angle (steering amount) of the vehicle V.

The accelerator pedal 74 and the brake pedal 75 are operation units operated by the operator. The accelerator pedal 74 and the brake pedal 75 are used to adjust the driving of the electric throttle V2 of the vehicle V and the operation of the electromagnetic brake device V3.

The plurality of operation switches 76 are used to input setting information for performing, for example, "remote driving" by the user. For example, the operator can switch the external video (synthesized video) of the vehicle V to a predetermined layout display by appropriately operating the operation switch 76. By appropriately operating the operation switch 76, the driving mode can be switched between the autonomous driving mode, the relative driving mode, and the remote driving mode.

### <Functions of Travel Control System>

As illustrated in FIG. 5, the travel control device 1 includes the storage unit 100 that stores various programs and various data in terms of functions. In addition, the travel control device 1 mainly includes an environment information acquisition unit 101, a traveling information acquisition unit 102 (a movement information acquisition unit), a self-position estimation unit 103, a travel control unit 104, a reference point specifying unit 105, a reference point recording unit 106, a map creation unit 107, a recognition unit 108, an estimation mode switching unit 109, a detection unit 110, a position error measurement unit 111, a correction route setting unit 112, and a traveling direction recognition unit 113 as main components in order to execute a "process of estimating a current position of a vehicle".

In addition, the travel control device 1 includes the travel control unit 104, a vehicle detection unit 114, a communication unit 115, a driving mode change unit 116, a travel speed acquisition unit 117, and a video processing unit 118 in order to mainly execute the "traveling control process of autonomous driving, relative driving, and remote driving".

The above-described components of the travel control device 1 include a CPU (a processor), a ROM, a RAM, an HDD, a communication interface, and various programs.

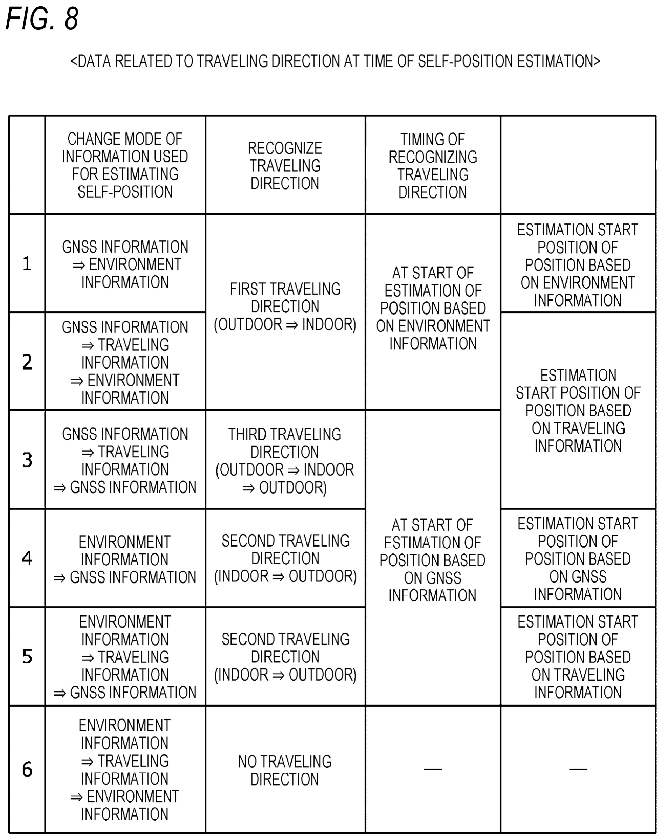

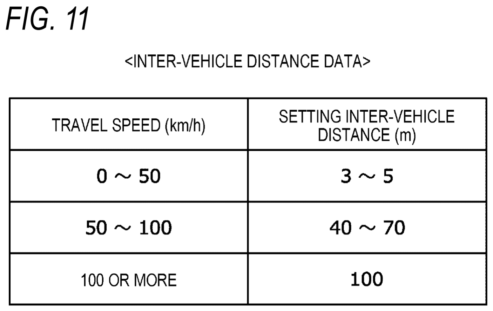

The storage unit 100 stores the vehicle identification information of the vehicle V, the scheduled travel route information of the vehicle V, "map information" illustrated in FIG. 6, "data related to a traveling direction at the time of self-position estimation" illustrated in FIG. 8, "inter-vehicle distance data" illustrated in FIG. 11, and the like.

From the viewpoint of functions, the vehicle information transmission device 50 mainly includes the storage unit 500 that stores various programs and various data, a position information acquisition unit 501 that acquires "current position information" of the target vehicle FV, and a communication unit 502 that transmits and receives various data to and from the travel control device 1.

The storage unit 500 stores "target vehicle information" including the current position information of the target vehicle FV, the scheduled travel route information, and the vehicle identification information.

The position information acquisition unit 501 acquires the "current position information" of the target vehicle FV in real time using the in-vehicle locator 51. By storing the acquired "current position information" in the storage unit 500, it is possible to record a traveling trajectory (a past traveling route) of the target vehicle FV on which the vehicle information transmission device 50 is mounted. Accordingly, the traveling trajectory of the target vehicle FV is stored in the storage unit 500.

The communication unit 502 transmits the "target vehicle information" to the travel control device 1 (the in-vehicle communication device 40) using the in-vehicle communication device 52 (see FIG. 3A). The communication unit 502 transmits the "current position information" of the target vehicle FV among the target vehicle information in real time.

The remote control device 70 mainly includes a storage unit 700, a communication unit 701, a screen display unit 702, an operation data creation unit 703, and a user notification unit 704 from the viewpoint of functions. The storage unit 700 stores various programs and various data. The communication unit 701 transmits and receives various data to and from the travel control device 1. The screen display unit 702 displays the external videos of the vehicle V and the vehicle information on the monitors 71. The screen display unit 702 displays, on the navigation monitor 72, the content (for example, vehicle navigation) based on the current position information of the vehicle V. The operation data creation unit 703 receives an input of a user operation and generates operation data. The user notification unit 704 is configured to notify the operator of the user.

Hereinafter, functions of the travel control device 1 will be described in detail.

### <<1. Self-Position Estimation>>

The travel control device 1 performs travel control of the vehicle V while estimating the current position of the vehicle V. A self-position estimation process is specifically as follows.

The environment information acquisition unit 101 acquires "environment information (strictly, detection information of the external environment)" around the vehicle V through the in-vehicle sensor 10 (a first sensor) mounted on the vehicle V.

Specifically, the environment information acquisition unit 101 acquires, as the "environment information", external video data around the vehicle V from the imaging devices 11, acquires detection result data of a target object around the vehicle V from the radars 12, and acquires distance measurement data obtained by measuring distances from the LIDARs 13 to the target object of the vehicle V.

Specifically, the "environment information" is detection information such as a moving object (another vehicle, a pedestrian, or the like) around the vehicle V, various structures, a road shape, or the like, is also referred to as traveling environment information, and includes traffic environment information, road environment information, or the like.

The traveling information acquisition unit 102 (the movement information acquisition unit) acquires "traveling information" of the vehicle V through the inertial measurement unit 22 (a second sensor) mounted on the vehicle V.

Specifically, the "traveling information" is behavior information (information based on behavior) of the vehicle V including information on the acceleration and the angular velocity of the vehicle V. The "traveling information" may include information on a rotation speed, a rotation angle, and the like of a wheel of the vehicle V, and information on a traveling operation at a constant speed, an acceleration operation, a deceleration operation, a stop operation, a left turn operation, a right turn operation, a reverse operation, and the like of the vehicle V.

The "traveling information" may be referred to as odometry information.

The self-position estimation unit 103 estimates the current position of the vehicle V based on information obtained through the in-vehicle sensor 10 and the in-vehicle locator 20 (the GNSS receiver 21, and the inertial measurement unit 22) mounted on the vehicle V.

Specifically, the self-position estimation unit 103 includes a first position estimation unit 103a, a second position estimation unit 103b, a third position estimation unit 103c, and a reception determination unit 103d.

The first position estimation unit 103a acquires "GNSS information" necessary for point positioning through the GNSS receiver 21, and calculates an "absolute position" of the vehicle V by point positioning.

The "absolute position" of the vehicle V is a three-dimensional position of the vehicle V obtained by receiving GNSS radio waves from the plurality of artificial satellites SA, measuring distances between the artificial satellites SA located at known points and the vehicle V, and solving a three-dimensional processing equation for obtaining unknown points from the measured distances (corresponding to the GNSS information).

The first position estimation unit 103a estimates the current position of the vehicle V based on the "absolute position" of the vehicle V.

The second position estimation unit 103b estimates the current position of the vehicle V using the "environment information" around the vehicle V obtained by the environment information acquisition unit 101.

The third position estimation unit 103c estimates the current position of the vehicle V using the "traveling information" of the vehicle V obtained by the traveling information acquisition unit 102.

The positional accuracy of the vehicle V estimated by the first position estimation unit 103a is higher than the positional accuracy of the vehicle V estimated by the second position estimation unit 103b and the positional accuracy of the vehicle V estimated by the third position estimation unit 103c. The positional accuracy of the vehicle V estimated by the second position estimation unit 103b is higher than the positional accuracy of the vehicle V estimated by the third position estimation unit 103c.

The reception determination unit 103d determines whether the "GNSS information" can be acquired in real time. When the reception determination unit 103d determines that the "GNSS information" can be acquired, the first position estimation unit 103a estimates the current position of the vehicle V based on the "GNSS information" (first estimation).

Specifically, the reception determination unit 103d assumes a case where the radio waves cannot be received from the artificial satellites SA due to an obstacle or the like around the vehicle V, and determines whether the radio waves can be received from the artificial satellites SA.

In response to determining that the "GNSS information" cannot be acquired, the reception determination unit 103d further determines whether the "environment information" can be acquired. When the reception determination unit 103d determines that the "environment information" can be acquired, the second position estimation unit 103b estimates the current position of the vehicle V based on the "environment information" (second estimation).

In response to determining that the "environment information" cannot be acquired, the reception determination unit 103d further determines whether the "traveling information" can be acquired. When the reception determination unit 103d determines that the "traveling information" can be acquired, the third position estimation unit 103c estimates the current position of the vehicle V based on the "traveling information" (third estimation).

When the reception determination unit 103d determines that the "environment information" cannot be acquired at a certain time, the self-position estimation unit 103 ends the self-position estimation process.

The first position estimation unit 103a acquires the "GNSS information" and estimates the current position of the vehicle V using the "absolute position" calculated by point positioning, or may estimate the current position of the vehicle V using the "relative position" calculated by relative positioning.

The "relative position" of the vehicle V is a three-dimensional position of the vehicle V that is obtained from the measured distances (corresponding to the GNSS correction information) by receiving GNSS radio waves at the reference stations ST located at known points, acquiring, from the reference station ST, distances (distances between the artificial satellites SA and the vehicle V) each having a smaller measurement error.

A calculation method of the "relative position" includes a calculation method of an RTK positioning method (an interferometric positioning method) and a calculation method of a DGPS positioning method (a relative positioning method). The "relative position" may be calculated by any calculation method.

The first position estimation unit 103a acquires the "GNSS correction information" necessary for the relative positioning from the reference stations ST, and estimates the current position of the vehicle V using the "relative position" calculated by the relative positioning.

The positional accuracy of the "relative position" is higher than the positional accuracy of the "absolute position". The positional accuracy of the "relative position" is about ± 40 cm.

Alternatively, the first position estimation unit 103a may further acquire the "traveling information" of the vehicle V through the inertial measurement unit 22, calculate a "corrected absolute position (a corrected relative position)" obtained by correcting the absolute position (the relative position) of the vehicle V based on the "GNSS information (GNSS correction information" and the "traveling information", and estimate a current position of the vehicle V using the "corrected absolute position (the corrected relative position)".

The "corrected absolute position" of the vehicle V is a three-dimensional position of the vehicle V obtained by combining the GNSS information and the traveling information (also referred to as IMU information) of the vehicle V and performing positioning.

The "corrected relative position" of the vehicle V is a three-dimensional position of the vehicle V obtained by combining the GNSS correction information and the traveling information of the vehicle V and performing positioning.

The positional accuracy of the "corrected absolute position" is higher than the positional accuracy of the "absolute position". The positional accuracy of the "corrected relative position" is higher than the positional accuracy of the "corrected absolute position". The positional accuracy of the "corrected relative position" is about ± 5 cm.

The first position estimation unit 103a may estimate the current position of the vehicle V using any of the "absolute position", the "relative position", the "corrected absolute position", and the "corrected relative position", but preferably estimates the current position of the vehicle V using the "corrected relative position" having the highest positional accuracy.

The travel control device 1 can record the traveling trajectory (the past traveling route) of the vehicle V by storing the position information obtained by the self-position estimation unit 103 in the storage unit 100. The traveling trajectory of the vehicle V is stored in the storage unit 100. The traveling trajectory of the vehicle V is used to determine whether the vehicle V is on a scheduled travel route on which the vehicle V travels, and to set a new scheduled travel route to be guided to the scheduled travel route as necessary.

### <<2. Self-Position Estimation Using Map Information and Travel Control>>

In a case of performing the self-position estimation, the travel control device 1 performs travel control of the vehicle V while estimating the current position of the vehicle V more accurately by using the "map information" illustrated in FIG. 6.

Specifically, the travel control device 1 uses "map information" including information on "reference points (the first reference point and the second reference point)" to recognize "spaces (the first space, the second space, and the third space)" reached based on reaching the reference points, performs self-position estimation according to the spaces, and performs travel control of the vehicle V while estimating the current position of the vehicle V. The specific processes are as follows.

### (Creation and Update of Map Information)

As illustrated in FIG. 6, the "map information" stored in the storage unit 100 includes map information, space information including information on the first space, the second space, and the third space, and information on the reference point including information on the first reference point and the second reference point. The "map information" stored in the storage unit 100 is created in advance by the travel control system S.

The "map information" is updated by the reference point specifying unit 105, the reference point recording unit 106, and the map creation unit 107. The "map information" may be newly created by the reference point specifying unit 105, the reference point recording unit 106, and the map creation unit 107 based on the map information.

The reference point specifying unit 105 identifies, as the "first reference point (the inlet reference point)", a position changed from a state (the first estimation state) where the self-position estimation unit 103 estimates the current position of the vehicle V based on the "GNSS information" to a state (the second estimation state) where the self-position estimation unit 103 estimates the current position of the vehicle V based on the "environment information".

The reference point specifying unit 105 also specifies, as the "first reference point", a position changed from the first estimation state to a state (a third estimation state) where the self-position estimation unit 103 estimates the current position of the vehicle V based on the "traveling information".

The reference point specifying unit 105 specifies, as the "second reference point (the outlet reference point)", a position changed from the second estimation state or the third estimation state to the first estimation state.

Specifically, when the estimation state of the current position based on the "GNSS information" (the first estimation state) is changed to the estimation state of the current position based on the "environment information" (the second estimation state), the reference point specifying unit 105 specifies, as the "first reference point", the current position based on the "GNSS information" acquired at the changed timing.

The "GNSS information" acquired at the changed timing is, in other words, the "GNSS information" acquired immediately before the change.

The same applies to a case where the first estimation state is changed to the third estimation state.

When the second estimation state is changed to the first estimation state, the reference point specifying unit 105 specifies, as the "second reference point", the current position based on the "GNSS information" acquired at the changed timing.

The "GNSS information" acquired at the changed timing is, in other words, the "GNSS information" acquired immediately after the change.

In this way, in a case of estimating the current position of the vehicle V, it is possible to specify a position of the reference point with higher accuracy by specifying a position of the reference point based on the "GNSS information" acquired immediately before or after the change.

When the estimation state (a third estimation state) of the current position based on the "traveling information" of the vehicle V is changed to the estimation state (a first estimation state) of the current position based on the "GNSS information", the reference point specifying unit 105 specifies, as the "second reference point", a current position based on the "traveling information" acquired at the changed timing.

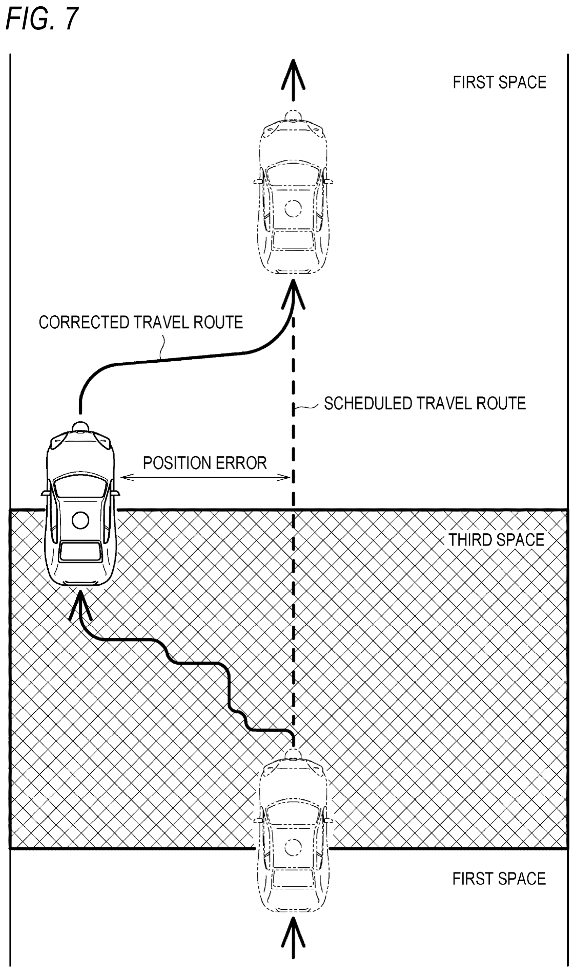

The reason why the current position is specified as the second reference point is as follows. When the estimation state is changed from the third estimation state to the first estimation state, a position error to be described later occurs at a change point (see FIG. 7). Therefore, it is possible to specify a more accurate reference point by using the current position information based on "traveling information" acquired immediately before the change rather than the current position information based on the "GNSS information" acquired after the change.

The reference point recording unit 106 records information on the first reference point and the second reference point specified by the reference point specifying unit 105, and stores the information in the storage unit 100 as recorded information (history information) on the reference points.

The map creation unit 107 updates the "map information" based on the history information of the reference points recorded by the reference point recording unit 106. Specifically, the map creation unit 107 newly updates the information on the first reference point and the second reference point in the map information included in the "map information".

The travel control device 1 appropriately transmits the map information updated by the map creation unit 107, that is, the information on the reference point to a management server (a cloud server) (not illustrated).

As described above, by transmitting the map information, the travel control system S can cause the management server to aggregate the recorded information on the reference points recorded and updated by various vehicles V (the travel control device 1), and can update existing map information as needed. The vehicle V (the travel control device 1) can acquire the updated map information and use the map information.

### (Self-Position Estimation Using Map Information)

The recognition unit 108 recognizes that the vehicle V has reached the reference point (the first reference point and the second reference point) recorded by the reference point recording unit 106 using the map information when the vehicle V is traveling along the predetermined scheduled travel route or within a certain time after the stop.

When the recognition is performed by the recognition unit 108, the estimation mode switching unit 109 switches an estimation mode at the reference point.

Specifically, when the vehicle V is traveling in the "first space" in the map information illustrated in FIG. 6, the recognition unit 108 recognizes that the vehicle V has reached the first reference point (a boundary point between the first space and the second space).

When the recognition unit 108 recognizes the arrival of the vehicle V at the first reference point, the estimation mode switching unit 109 switches from the first estimation mode to the second estimation mode. The first estimation mode is also referred to as a first estimation state, and is a mode in which the self-position estimation unit 103 estimates the current position of the vehicle V based on the "GNSS information". The second estimation mode is also referred to as a second estimation state, and is a mode in which the self-position estimation unit 103 estimates the current position of the vehicle V based on the "environment information". The self-position estimation unit 103 estimates the current position of the vehicle V in the second estimation mode set by the estimation mode switching unit 109.

The travel control unit 104 controls the traveling of the vehicle V in the "second space" while estimating the current position of the vehicle V in the second estimation mode.

When the vehicle V is traveling in the "second space" in the map information illustrated in FIG. 6, the recognition unit 108 recognizes that the vehicle V has reached the second reference point.

When the recognition unit 108 recognizes the arrival of the vehicle V at the second reference point, the estimation mode switching unit 109 switches the estimation mode from the "second estimation mode" to the "first estimation mode". In the first estimation mode, the self-position estimation unit 103 estimates the current position of the vehicle V.

The travel control unit 104 controls the traveling of the vehicle V in the "first space" while estimating the current position of the vehicle V in the first estimation mode.

When the vehicle V is traveling in the "first space" in the map information illustrated in FIG. 6, the recognition unit 108 recognizes that the vehicle V has reached the first reference point (a boundary point between the first space and the third space).

When the recognition unit 108 recognizes the arrival of the vehicle V at the first reference point, the estimation mode switching unit 109 switches the estimation mode from the "first estimation mode" to the "third estimation mode". The third estimation mode is also referred to as a third estimation state, and is a mode in which the self-position estimation unit 103 estimates the current position of the vehicle V based on the "traveling information". The self-position estimation unit 103 estimates the current position of the vehicle V in the third estimation mode.

The travel control unit 104 controls the traveling of the vehicle V in the "third space" while estimating the current position of the vehicle V in the third estimation mode.

The same applies to switching from the "third estimation mode" to the "first estimation mode".

Thus, since the vehicle V (the travel control device 1) recognizes the reference point (the first reference point and the second reference point), the travel control device 1 can switch the self-position estimation method of the vehicle V with good timing (can immediately perform a switching process) based on the arrival at the reference point. That is, the travel control device 1 can smoothly control the traveling of the vehicle V at the switching timing of the self-position estimation.

### (Preparation for Mode Switching)

The travel control device 1 may prepare for switching the self-position estimation (start of activation for switching) when the vehicle V approaches the reference point based on the information on the reference point (the first reference point and the second reference point) included in the "map information". The preparation for switching the self-position estimation will be described in detail below.

The detection unit 110 detects that the vehicle V has reached a certain distance from the reference point included in the "map information" when the vehicle V is traveling along the predetermined scheduled travel route based on the "map information".

When the detection unit 110 detects the vehicle V, the estimation mode switching unit 109 prepares to switch the estimation mode at the reference point.

Specifically, when the vehicle V is traveling in the "first space", the detection unit 110 detects that the vehicle V has reached within a certain distance from the first reference point (the boundary point between the first space and the second space) included in the "map information".

When it is detected that the vehicle V has reached within a certain distance from the first reference point, the estimation mode switching unit 109 prepares to switch from the first estimation mode to the second estimation mode at the first reference point. That is, preparation for a state where the self-position can be estimated based on the environment information is performed (preparation of activation and start of activation for the self-position estimation by the in-vehicle sensor 10).

By performing this preparation, the travel control device 1 can estimate the current position of the vehicle V more accurately by switching the self-position estimation method with higher timing.

### (Setting of Corrected Travel Route)

A process of changing from the "third estimation mode (the third estimation state)" in which the self-position estimation is performed using the "traveling information" to the "first estimation mode (the first estimation state)" in which the self-position estimation is performed using the "GNSS information" will be described in more detail with reference to FIG. 7.

As described above, the case where the "third estimation mode" is performed includes a state where the vehicle V is located in a tunnel or under an elevated road, a state immediately after the vehicle V moves from the "second space" to the "first space", and the like. At this time, the vehicle V acquires the "traveling information" of the vehicle V by the inertial measurement unit 22.

Here, as illustrated in FIG. 7, a position error may occur between the current position estimated in the "third estimation mode" based on the traveling information and the current position estimated in the "first estimation mode" based on the GNSS information. For example, when the accuracy of the current position information of the vehicle V is low in the third space and the vehicle V slightly deviates from the scheduled travel route, a position error occurs.

In this case, at the second reference point (outlet reference point), the current position information (position information immediately before switching) in the "third estimation mode" is a position along the scheduled travel route (a position different from the actual position). On the other hand, the current position information (position information immediately after switching) in the "first estimation mode" is a position (actual position) deviated from the scheduled travel route.

In a case where a position error occurs as described above, the travel control device 1 calculates the position error and sets a corrected travel route for guiding the vehicle V to the scheduled travel route. The travel control device 1 controls the traveling of the vehicle V along the corrected travel route, controls the traveling of the vehicle V along the scheduled travel route when the vehicle V returns to the scheduled travel route, and guides the vehicle V to the destination position.

The specific processes are as follows.

As illustrated in FIG. 7, when the vehicle V travels in the "third estimation mode" in the "third space" and reaches the second reference point (the boundary point between the third space and the first space), the recognition unit 108 recognizes that the vehicle V has reached the second reference point.

When the recognition unit 108 performs the recognition, the estimation mode switching unit 109 switches from the "third estimation mode" to the "first estimation mode" at the second reference point.

The position error measurement unit 111 measures the position error between the current position (a position different from an actual position) of the vehicle V estimated in the "third estimation mode" and the current position (an actual position) of the vehicle V estimated in the "first estimation mode" at the second reference point.

The correction route setting unit 112 sets a corrected travel route for guiding the vehicle to the scheduled travel route based on the position error measured at the second reference point.

The travel control unit 104 controls the traveling of the vehicle V along the corrected travel route, and when the vehicle V returns to the scheduled travel route, the travel control unit 104 controls the traveling of the vehicle V along the scheduled travel route to guide the vehicle V to the destination position.

As described above, in a case where a position error occurs at a reference point in estimating the self-position of the vehicle V, it is possible to newly set the corrected travel route based on the position error, smoothly guide the vehicle V to the scheduled travel route, and cause the vehicle V to travel to the destination position.

As a case where the position error occurs, a case where the "third estimation mode (the third estimation state)" is changed to the "second estimation mode (the second estimation state)" is assumed in addition to the case illustrated in FIG. 7.

### <<3. Recognition of Traveling Direction>>

The travel control unit 104 controls traveling of the vehicle V based on the "position information (the current position)" of the vehicle V estimated by the self-position estimation unit 103 and the "traveling direction" of the vehicle V recognized by the traveling direction recognition unit 113.

The "traveling direction" indicates a direction in which the vehicle V travels after an estimation state (an estimation mode) is changed by the self-position estimation unit 103 (the estimation mode switching unit 109), and is also referred to as a traveling vector (a movement vector) of the vehicle V.

Since the travel control device 1 recognizes the "traveling direction", when the self-position estimation method is changed (switched), the behavior of the vehicle V immediately after the change (immediately after the switching) can be grasped, and the traveling of the vehicle V can be controlled more smoothly.

The specific processes are as follows.

### (Recognition of Traveling Direction)

The self-position estimation unit 103 estimates the current position of the vehicle V from the "first estimation state", the "second estimation state", and the "third estimation state".

When the estimation state is changed by the self-position estimation unit 103 while the vehicle V is traveling or within a certain time after the vehicle V stops, the traveling direction recognition unit 113 recognizes the "traveling direction" of the vehicle V based on a mode of the change. In other words, the traveling direction recognition unit 113 recognizes the "traveling direction" of the vehicle V based on a change mode of the information (the GNSS information, the environment information, and the traveling information) used for the self-position estimation.

When the first estimation state is changed to the second estimation state by the self-position estimation unit 103, the traveling direction recognition unit 113 recognizes the traveling direction of the vehicle V as a "first traveling direction".

The "first traveling direction" indicates a direction in which the vehicle V travels from the "first space" to the "second space", in other words, indicates a direction in which the vehicle V travels from the "outdoor space" to the "indoor space".

When the second estimation state is changed to the first estimation state by the self-position estimation unit 103, the traveling direction recognition unit 113 recognizes the traveling direction of the vehicle V as a "second traveling direction".

The "second traveling direction" indicates a direction in which the vehicle V travels from the "second space" to the "first space", in other words, indicates a direction in which the vehicle V travels from the "indoor space" to the "outdoor space".

Specifically, this is as "data related to the traveling direction at the time of self-position estimation" illustrated in FIG. 8.

As illustrated in FIG. 8, when the information used for the self-position estimation changes from the "GNSS information" to the "environment information" (when the first estimation state is changed to the second estimation state), the traveling direction recognition unit 113 recognizes the traveling direction of the vehicle V as the "first traveling direction".

When the information used for the self-position estimation changes from the "GNSS information" to the "environment information" through the "traveling information" (when the first estimation state is changed to the second estimation state through the third estimation state), the traveling direction recognition unit 113 similarly recognizes the traveling direction of the vehicle V as the "first traveling direction".

When the information used for the self-position estimation changes from the "GNSS information" to the "GNSS information" through the "traveling information" (when the first estimation state is changed to the second estimation state through the third estimation state), the traveling direction recognition unit 113 recognizes the traveling direction of the vehicle V as the "third traveling direction".

The "third traveling direction" indicates a direction in which the vehicle V travels from the "first space" to the "first space" through the "third space" temporarily. In other words, the third traveling direction indicates a direction in which the vehicle V travels to temporarily return from the "outdoor space" to the "outdoor space" through the "indoor space".

The case where the vehicle V travels in the third traveling direction is a case where the vehicle V is temporarily in a state where the GNSS information cannot be acquired (a state where the external communication cannot be performed), for example, a case where the vehicle V temporarily travels in a tunnel or under an elevated road.

When the information used for the self-position estimation changes from the "environment information" to "GNSS" (when the second estimation state is changed to the first estimation state), the traveling direction recognition unit 113 recognizes the traveling direction of the vehicle V as the "second traveling direction".

When the information used for the self-position estimation changes from the "environment information" to the "GNSS information" through the "traveling information" (when the second estimation state is changed to the first estimation state through the third estimation state), the traveling direction recognition unit 113 similarly recognizes the traveling direction of the vehicle V as the "second traveling direction".

When the information used for the self-position estimation temporarily changes from the "environment information" to the "environment information" through the "traveling information" (when the second estimation state is changed to the second estimation state through the third estimation state), the traveling direction of the vehicle V is not set. This is because there is no movement between the "indoor space" and the "outdoor space" when the "second space" and the "third space" are regarded as the "indoor space" and the "first space" is regarded as the "outdoor space". No movement between the "indoor space" and the "outdoor space" means that the traveling direction of the vehicle V is not changed.

### (Timing of Recognizing Traveling Direction)

A timing at which the traveling direction recognition unit 113 recognizes the traveling direction of the vehicle V is as follows.

When the "first estimation state" is changed to the "second estimation state" while the vehicle V is traveling, the traveling direction recognition unit 113 recognizes the "first traveling direction" at a timing at which the self-position estimation unit 103 starts estimating the current position of the vehicle V based on the "environment information".

When the "second estimation state" is changed to the "first estimation state" while the vehicle V is traveling, the traveling direction recognition unit 113 recognizes the "second traveling direction" at a timing at which the self-position estimation unit 103 starts estimating the current position of the vehicle V based on the "GNSS information".

Specifically, this is as "data related to the traveling direction at the time of self-position estimation" illustrated in FIG. 8.

As illustrated in FIG. 8, when the information used for the self-position estimation changes from the "GNSS information" to the "environment information" (when the first estimation state is changed to the second estimation state), the traveling direction recognition unit 113 recognizes the traveling direction (a first traveling direction) of the vehicle V based on the timing at which the self-position estimation unit 103 starts estimating the current position of the vehicle V based on the "environment information".

When the information used for the self-position estimation changes from the "environment information" to the "GNSS information" (when the second estimation state is changed to the first estimation state), the traveling direction recognition unit 113 recognizes the traveling direction (the second traveling direction) of the vehicle V based on a timing at which the self-position estimation unit 103 starts estimating the current position of the vehicle V based on the "GNSS information".

When the information used for the self-position estimation changes again from the "GNSS information" to the "GNSS information" through the "traveling information" (when the first estimation state is changed again to the first estimation state through the third estimation state), the traveling direction recognition unit 113 recognizes the traveling direction (the third traveling direction) of the vehicle V based on a timing at which the self-position estimation unit 103 starts estimating the current position of the vehicle V based on the "GNSS information".

Thus, when the self-position estimation method is changed, the traveling direction recognition unit 113 recognizes the traveling direction of the vehicle V at the timing at which the acquisition of the information (the GNSS information or the environment information) obtained immediately after the change is started.

Thus, by recognizing the traveling direction, the travel control unit 104 can control the traveling of the vehicle V using the "information (for example, the environment information) obtained after the change" and the "traveling direction of the vehicle V (for example, the first traveling direction)" recognized at the timing at which the information is started to be acquired, when the information used for the self-position estimation changes. That is, the travel control device 1 can control the traveling of the vehicle V while grasping the behavior of the vehicle V.

### (Switching Position of Estimation State)

When the "first estimation state based on the GNSS information" is changed to the "second estimation state based on the environment information" by the self-position estimation unit 103 and the "first traveling direction" is recognized by the traveling direction recognition unit 113, the reference point specifying unit 105 specifies, as a "reference point (the first reference point)", a position where the self-position estimation unit 103 starts estimating the self-position of the vehicle V based on the "environment information".

When the "second estimation state based on the environment information" is changed to the "first estimation state based on the GNSS information" and the "second traveling direction" is recognized, the reference point specifying unit 105 specifies, as a "reference point (the second reference point)", a position where the self-position estimation unit 103 starts estimating the self-position of the vehicle V based on the GNSS information.

Specifically, this is as "data related to the traveling direction at the time of self-position estimation" illustrated in FIG. 8.

In this way, when the information used for the self-position estimation changes, the position of the reference point is specified based on the "information obtained after the change" and the "traveling direction of the vehicle V", so that the reference point can be specified at a position with higher accuracy.

On the other hand, as illustrated in FIG. 8, when the "first estimation state based on the GNSS information" is changed to the "second estimation state based on the environment information" through the "third estimation state based on the traveling information" and the "first traveling direction" is recognized by the traveling direction recognition unit 113, the reference point specifying unit 105 specifies, as a "reference point (the first reference point)", a position where the self-position estimation unit 103 starts estimating the self-position of the vehicle V based on the "traveling information" (an item 2 in FIG. 8).

When the "first estimation state based on the GNSS information" is changed to the "first estimation state based on the GNSS" through the "third estimation state based on the traveling information" and the "third traveling direction" is recognized, the reference point specifying unit 105 specifies, as a "reference point (the second reference point)", a position where the self-position estimation unit 103 starts estimating the self-position of the vehicle V based on the "traveling information" (an item 3 in FIG. 8).

As described above (as described with reference to FIG. 7), a position error occurs between the current position estimated in the "third estimation state" based on the traveling information and the current position estimated in the "first estimation state (the second estimation state)" based on the GNSS information (the environment information). Therefore, a more accurate reference point is specified by using the current position information based on the "traveling information" acquired immediately before the change rather than the current position information based on the "GNSS information (environment information)" acquired after the change. Therefore, the reference point specifying unit 105 specifies, as a reference point, a position at which the acquisition of the current position information based on the "traveling information" is started.

After a reference point is specified by the reference point specifying unit 105 and the reference point is recorded by the reference point recording unit 106, the self-position estimation unit 103 (the estimation mode switching unit 109) changes an estimation mode at the reference point, and the traveling direction recognition unit 113 recognizes the traveling direction of the vehicle V.

The travel control unit 104 performs travel control of the vehicle V based on the current position of the vehicle V estimated by the self-position estimation unit 103 and the traveling direction of the vehicle V recognized by the traveling direction recognition unit 113.

Thus, by switching the self-position estimation method using the reference point and recognizing the traveling direction of the vehicle V, it is possible to grasp the behavior of the vehicle V more accurately when the vehicle V passes through the reference point. As a result, the traveling of the vehicle V can be controlled more smoothly.

### (Advantages of Recognizing Reference Point and Traveling Direction)

In the travel control device 1, there are a case ("a case 1") where the vehicle V has "information in the second space" as map information in advance and a case (a "case 2") where the vehicle V does not have "information in the second space" as map information.

The "case 1" is, for example, that the vehicle V has visited a place in the past or that information on the place has been acquired from another vehicle. The "case 2" is a case different from the "case 1".

As the "case 1", when the vehicle V has the "information in the second space" as the map information, the map information is in a state in which the information in the first space, the information in the second space, and the information in the third space and the information on the reference point are stored in each vehicle V in association with each other and are managed by the management server (the cloud server).

Therefore, even when there is a similar place in a space while the vehicle V is traveling, the vehicle V recognizes the reference point, so that the corresponding the map information (the space information) can be specified. The similar place is, for example, a place having a structure in which a position and shape of a pillar and a position and shape of a window are similar, or a place having a building constructed by the same construction company.

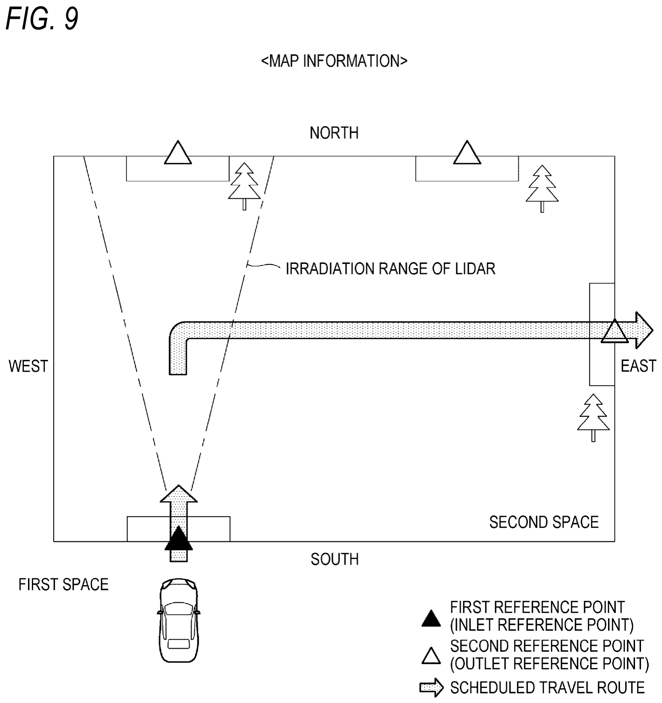

As illustrated in FIG. 9, the map information includes orientation information (north, south, east, and west) as map information in addition to the space information and the information on the reference point being associated with each other. The vehicle V can recognize the traveling direction of the vehicle V by specifying the information on the reference point (the inlet reference point and the outlet reference point) and the orientation information.

In the case of the "case 1", as illustrated in FIG. 9, the vehicle V expands (sets to be usable) the "map information" when moving from the first space to the second space, and sets an irradiation range of the LIDAR 13 (the radar 12) within a range designated in advance. That is, the irradiation range of the LIDAR 13 is not set to the entire range (it is not necessary to tilt the vehicle V to irradiate the entire range).

The vehicle V can control a traveling direction, a traveling distance, and the like of the vehicle V using the "traveling information" while recognizing an object (a structure, a moving object, or the like) in a preset irradiation range of the LIDAR 13 using the "map information".

By limiting a search range in this way, a search process can be shortened, and a processing speed of the self-position estimation can be increased. In addition, the accuracy of the self-position estimation can be improved in the second space.

This is an advantage that the vehicle V can recognize the reference point and the traveling direction.

As an example of the "case 1", as illustrated in FIG. 9, it is assumed that the vehicle V moves from the first space (a south side) to the second space (a north side), then turns 90 degrees in the second space to travel to an east side, and moves from the second space (a west side) to the first space (the east side).

In this case, even in a case where the self-position estimation based on the "environment information" cannot be performed when the vehicle V moves from the first space to the second space, the vehicle V can recognize to which position the vehicle V should travel straight and to what extent the vehicle V should turn at which position by specifying the space information, the information on the reference point , and the orientation information using the "map information" and recognizing the traveling direction.

On the other hand, as the "case 2", when the vehicle V does not have the "information in the second space" as the map information, the vehicle V cannot naturally grasp the information in the second space.

Therefore, when the vehicle V moves from the first space to the second space, it is necessary to set the irradiation range of the LIDAR 13 to the entire range. That is, it is necessary to search the second space in all directions (also referred to as a full search).

The reason why the full search is required is that there is a case where similar places exist in another place in the space, and in such a case, the vehicle V cannot accurately travel in the second space unless the vehicle V performs the full search. If the full search is not performed, the vehicle V comes back and forth or goes around the same position.

When the vehicle V performs the entire search of the second space as in the above "case 2", the search process takes time. In addition, there is a possibility that the self-position estimation process is erroneous in the second space.

### <<4. Autonomous Driving Control>>

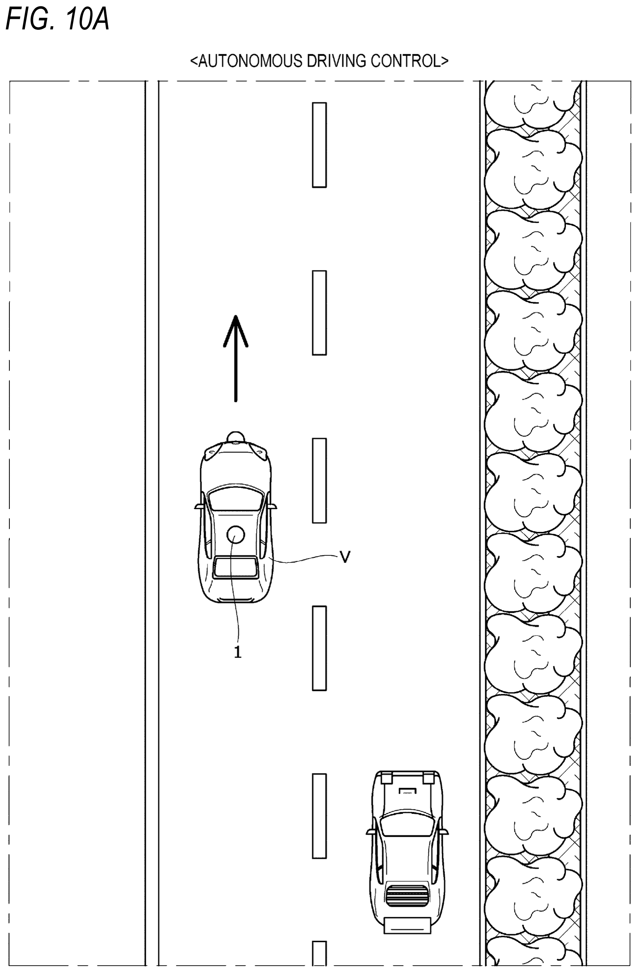

The travel control unit 104 controls the general ECU 31 based on the "environment information" obtained by the environment information acquisition unit 101 and the "position information (current position) of the vehicle V" obtained by the self-position estimation unit 103 to perform the "autonomous driving control" of the vehicle V (see FIG. 10A).

In order to perform the "autonomous driving control" of the vehicle V, the travel control unit 104 may acquire the "vehicle information" of the vehicle V from the in-vehicle ECU 30 and further combine the "vehicle information" to control the general ECU 31.

When the vehicle V starts traveling along the scheduled travel route of the vehicle V, the travel control unit 104 performs "autonomous driving control" and starts autonomous driving of the vehicle V.

Specifically, when the vehicle V starts traveling, the "autonomous driving mode" is set. The travel control unit 104 performs autonomous driving control in a state where the "autonomous driving mode" is set.

Thereafter, the vehicle V travels toward a destination of the scheduled travel route while a driving mode of the vehicle V is changed between the "autonomous driving mode" and the "relative driving mode" by the driving mode change unit 116.

When the target vehicle FV to follow is detected at the timing at which the vehicle V starts traveling and the position information of the target vehicle FV is obtained in real time, the state may be changed from the "autonomous driving mode" to the "relative driving mode" by the driving mode change unit 116. In this case, the travel control unit 104 performs the relative driving control in a state where the "relative driving mode" is set, and starts the relative driving of the vehicle V relative to the target vehicle FV.

Alternatively, when the vehicle V starts traveling, the "remote driving mode" may be set instead of the "autonomous driving mode", and the travel control unit 104 may perform the remote driving control in a state where the "remote driving mode" is set.

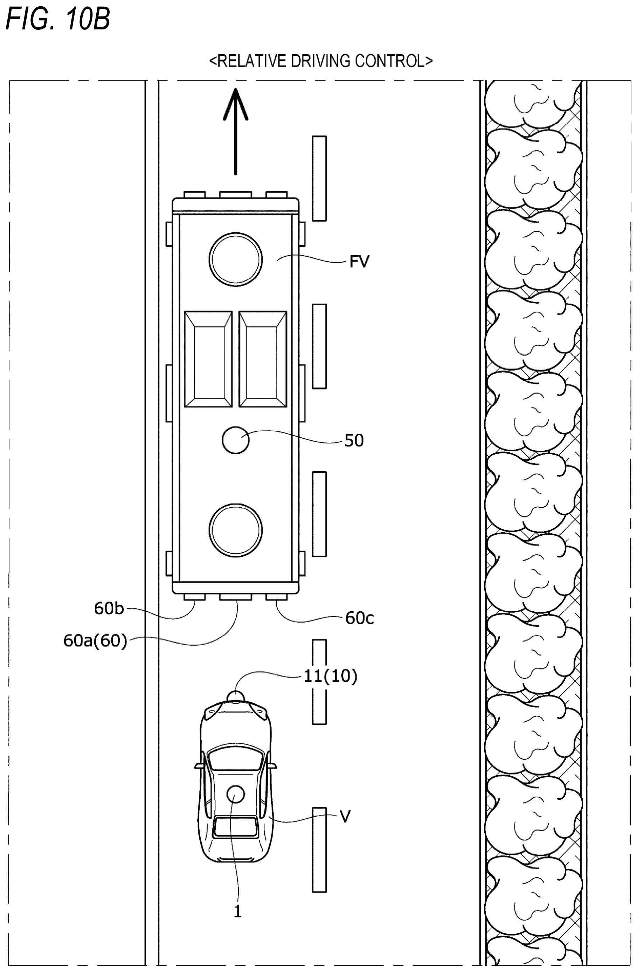

The vehicle detection unit 114 detects that a predetermined preceding vehicle traveling ahead of the vehicle V is the target vehicle FV to follow on the scheduled travel route of the vehicle V (see FIG. 10B).

The "target vehicle to follow" includes a vehicle that travels on a scheduled travel route that partially matches at least the scheduled travel route of the vehicle V, and a vehicle that travels on the same route as the scheduled travel route of the vehicle V at a constant travel distance (a travel time).

The "target vehicle to follow" includes, for example, a vehicle that travels around the vehicle V when traveling on a highway, a general road, or the like having no branch point at a constant travel distance (a travel time).

Specifically, the vehicle detection unit 114 detects that the predetermined preceding vehicle is the target vehicle FV based on recognition results of the identification marks 60 of the preceding vehicle recognized by the imaging devices 11.

For example, when the first identification mark 60a of the target vehicle FV is recognized, the vehicle detection unit 114 detects that the target vehicle FV is present at a front position of the vehicle V.

Alternatively, when the seventh identification mark 60g of the target vehicle FV is recognized, the vehicle detection unit 114 detects that the target vehicle FV is present at a right position of the vehicle V.

More specifically, the vehicle detection unit 114 acquires recognition results of the identification marks 60a to 601 of the target vehicle FV from the imaging device 11 in real time. More specifically, by acquiring the recognition results of the identification marks 60a to 601 of the target vehicle FV in real time, the vehicle detection unit 114 can accurately detect a relative position of the target vehicle FV relative to the vehicle V in real time based on the vehicle identification information (a shape and size of the target vehicle FV) of the target vehicle FV and the mark position information embedded in the identification marks 60a to 601.

For example, the travel control device 1 can accurately detect that the target vehicle FV travels at a front position slightly on a left side relative to the vehicle V, or that the target vehicle FV travels in parallel with the vehicle V and travels slightly in front of the vehicle V, and the like. In this case, the relative position of the target vehicle FV may be specified by, for example, a three-dimensional coordinate position having the vehicle V as a center position.

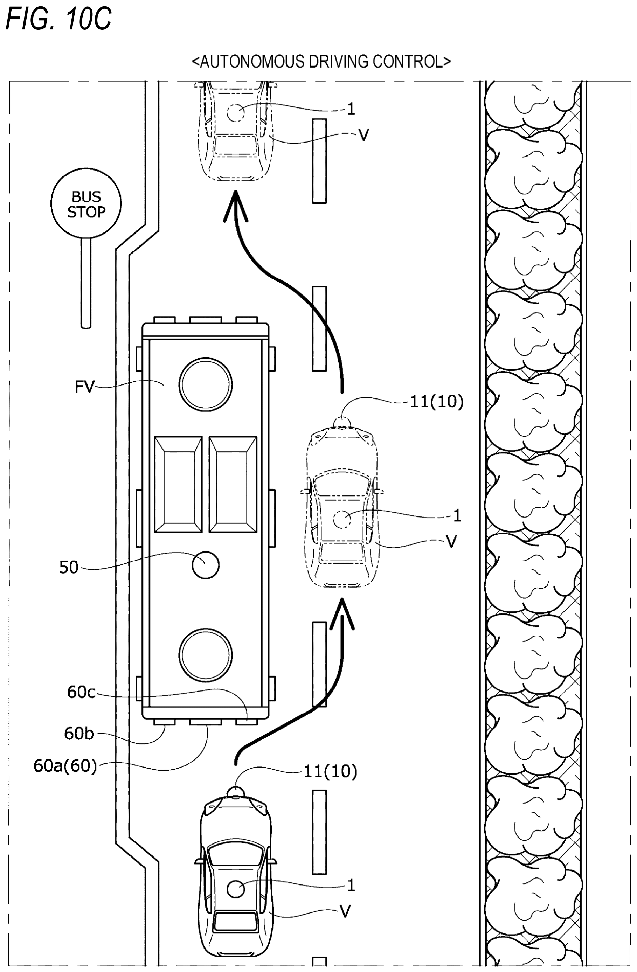

Thus, as illustrated in FIG. 10B, the vehicle V can be relatively driven while maintaining an appropriate inter-vehicle distance between the vehicle V and the target vehicle FV. In addition, as illustrated in FIG. 10C, the vehicle V can be autonomously driven such that the vehicle V appropriately overtakes the target vehicle FV.

The vehicle detection unit 114 detects the target vehicle FV based on the recognition results of the identification marks 60, and the target vehicle FV may be detected by other detection units.

For example, the vehicle detection unit 114 may acquire the vehicle identification information of the target vehicle FV from the vehicle information transmission device 50 mounted on the target vehicle FV through wireless communication using the in-vehicle communication device 40, and detect the target vehicle FV based on the vehicle identification information.

In other words, the target vehicle FV may be detected by the identification marks 60 attached to the target vehicle FV, or the target vehicle FV may be detected through wireless communication with the vehicle information transmission device 50 mounted on the target vehicle FV.

The communication unit 115 receives target vehicle information including at least the position information of the target vehicle FV detected by the vehicle detection unit 114.

Specifically, when the vehicle detection unit 114 detects the target vehicle FV, the communication unit 115 starts communication with the vehicle information transmission device 50 via a network.

The communication unit 115 receives the position information of the target vehicle FV and the scheduled travel route information from the vehicle information transmission device 50 mounted on the target vehicle FV.

The position information acquisition unit 501 of the vehicle information transmission device 50 acquires the "current position information" of the target vehicle FV in real time in the same manner as the above-described self-position estimation unit 103.

### <<5. Mode Change (Autonomous driving → Relative Driving)>>

The driving mode change unit 116 changes the "autonomous driving mode (autonomous driving control)" to the "relative driving mode (relative driving control)" when a predetermined relative driving start condition is satisfied.

Specifically, in a case where the autonomous driving control is performed in a state where the "autonomous driving mode" is set as illustrated in FIG. 10A, when the target vehicle FV is detected by the vehicle detection unit 114 and the target vehicle information is received by the communication unit 115, the driving mode change unit 116 changes the "autonomous driving mode" to the "relative driving mode" as illustrated in FIG. 10B.

More specifically, the vehicle detection unit 114 determines whether a preceding vehicle is the target vehicle FV when the preceding vehicle is detected under the "predetermined relative driving start condition", and recognizes the preceding vehicle as the target vehicle FV in response to determining that the preceding vehicle is the target vehicle FV. The driving mode change unit 116 changes the "autonomous driving mode" to the "relative driving mode".

In response to determining that the preceding vehicle is not the target vehicle FV, the "predetermined relative driving start condition" is not satisfied even when the preceding vehicle is detected, and thus the driving mode change unit 116 does not change the mode.

Here, the "target vehicle FV" is a vehicle that has a vehicle ID registered in advance by the travel control device 1 (the storage unit 100) mounted on the vehicle V and is identified by the vehicle ID. When the vehicle ID is set for the preceding vehicle, the "predetermined relative driving start condition" is satisfied. On the other hand, when the vehicle ID is not set for the preceding vehicle, the "predetermined relative driving start condition" is not satisfied.

Specifically, when the target vehicle FV is detected in the case where the autonomous driving control is performed in the state where the "autonomous driving mode" is set, the driving mode change unit 116 sets the "relative driving mode" in the state where the "autonomous driving mode" is set. In other words, the driving mode change unit 116 changes the "relative driving mode" from an enabled state to a disabled state while the "autonomous driving mode" is set to an enabled state.

At this time, the driving mode change unit 116 preferentially continues the "autonomous driving mode" in a state where both modes are set. That is, the travel control unit 104 continuously performs the autonomous driving control.

When the target vehicle information of the target vehicle FV is obtained in a case where the autonomous driving control continues in the state where both modes are set, the driving mode change unit 116 preferentially performs the "relative driving mode" in the state where both modes are set. That is, the travel control unit 104 newly performs the relative driving control.

When the target vehicle information of the target vehicle FV is not obtained in the case where the autonomous driving control continues in the state where both modes are set, that is, when the wireless communication with the vehicle information transmission device 50 mounted on the target vehicle FV is not possible, the driving mode change unit 116 returns the "relative driving mode" set once to an unset state. In other words, the driving mode change unit 116 returns the "relative driving mode" from the enabled state to the disabled state. At this time, since the "autonomous driving mode" remains set (the enabled state), the travel control unit 104 continues to perform the autonomous driving control.

### <<6. Relative Driving Control>>

The travel control unit 104 controls the general ECU 31 based on the "environment information", the "position information of the vehicle V", and the "target vehicle information of the target vehicle FV", and performs the "relative driving control" of the vehicle V relative to the target vehicle FV (see FIG. 10B).

The travel control unit 104 can perform suitable relative driving according to a type of the target vehicle FV (a shape or size, traveling performance, fuel consumption, an exhaust amount, and the like) by further combining the "vehicle identification information of the target vehicle FV" obtained from the recognition results of the identification marks 60 and controlling the general ECU 31 to perform the "relative driving control".

The "relative driving control" performed by the travel control unit 104 is a control process of specifying, based on the "position information of the target vehicle FV" included in the target vehicle information acquired from the target vehicle FV, position information on which the vehicle V travels on a traveling trajectory drawn based on the position information of the target vehicle FV. In the relative driving control, in order to appropriately secure an inter-vehicle distance between the vehicle V and the target vehicle FV on the traveling trajectory of the vehicle V and the target vehicle FV, control of traveling predetermined position information with a setting inter-vehicle distance according to a travel speed of the vehicle V is performed.

Specifically, the travel speed acquisition unit 117 acquires the "traveling information (acceleration and angular velocity)" of the vehicle V from the inertial measurement unit 22, and acquires the "travel speed" of the vehicle V in real time by integrating the acceleration and the angular velocity.

The travel control unit 104 specifies position information on which the vehicle V travels based on the position information of the target vehicle FV with reference to the "inter-vehicle distance data" illustrated in FIG. 11 stored in the storage unit 100, and performs relative driving control for causing the vehicle V to travel relative to the target vehicle FV based on the position information of the vehicle V and the environment information.

In the relative driving control, a process of correcting the position information of the vehicle V based on the "position information of the vehicle V" and correcting a trajectory is performed such that the vehicle V actually travels the position information specified based on the position information of the target vehicle FV. That is, the relative driving control is a process of correcting a deviation (an error) between position information in which a moving object travels and position information in which the moving object actually travels, which is specified based on the position information of the target vehicle FV, and correcting the trajectory.

A traveling trajectory (a traveling trajectory based on the position information of the vehicle V) along which the vehicle V has actually traveled by this process is stored in the storage unit 100.

The "inter-vehicle distance data" illustrated in FIG. 11 is a data table indicating a correspondence relation between the travel speed of the vehicle V and the setting inter-vehicle distance.

For example, when the travel speed (an average travel speed) of the vehicle V is "80 km/h", the setting inter-vehicle distance between the vehicle V and the target vehicle FV is set to "40 m to 70 m".

The "inter-vehicle distance data" may be graph data in which the travel speed of the vehicle V is taken as an X-axis, the setting inter-vehicle distance is taken as a Y-axis, and the setting inter-vehicle distance increases in proportion to the travel speed (increases quadratically).

In order to calculate the "travel speed" of the vehicle V, the travel speed acquisition unit 117 may calculate a "speed" of the vehicle V by processing the "GNSS information (the GNSS correction information)" and the "acceleration and angular velocity information" using a Kerman filter. By performing this calculation, the "travel speed" can be calculated more accurately.

In order to acquire the "speed information" of the vehicle V, a wheel speed sensor may be newly mounted on the vehicle V, and the "speed information" may be acquired through the wheel speed sensor.

Although the travel control unit 104 performs the relative driving control at a setting inter-vehicle distance according to the travel speed of the vehicle V, the travel control unit 104 may perform the relative driving control of the vehicle V relative to the target vehicle FV in a synchronous state between the vehicle V and the target vehicle FV (for example, a state where the vehicle V also travels "1 m" when the target vehicle FV travels "1 m").

In the case of the synchronous state, the travel control unit 104 may acquire the environment information around the vehicle V, the position information of the vehicle V, and target vehicle information including the position information of the target vehicle FV in real time, and perform the relative driving control by combining these pieces of information.

### <<7. Mode Change (Relative Driving → Autonomous Driving)>>

### (When Target Vehicle Performs Stop Operation)

When the "predetermined condition according to the travel state" of the target vehicle FV is satisfied in a case where the relative driving control is performed in the state where the "relative driving mode" is set as illustrated in FIG. 10B, the driving mode change unit 116 changes a traveling mode of the vehicle V from the relative driving mode to the "autonomous driving mode". The travel control unit 104 performs autonomous driving control in the "autonomous driving mode" for traveling of the vehicle V as illustrated in FIG. 10C.

The "predetermined condition according to the travel state" is a case where, in order for the vehicle V to travel efficiently, it is detected from the behavior of the target vehicle FV that it is necessary for the vehicle V to overtake the target vehicle FV, or it is necessary to travel on a route different from that of the target vehicle FV.

The "predetermined condition according to the travel state" is, for example, a case where it is detected from the behavior of the target vehicle FV that the traveling target vehicle FV performs a stop operation on a roadside (a roadside zone) or starts the stop operation.

Further, the "predetermined condition according to the travel state" is, for example, a case where it is detected from the behavior of the target vehicle FV that the traveling target vehicle FV starts traveling along a route (specifically, a route toward a rest area) different from the scheduled travel route.

That is, the "predetermined condition according to the travel state" can also be referred to as a "relative driving release condition" for releasing the relative driving control of the vehicle V.

Hereinafter, as illustrated in FIG. 10C, a case where the traveling target vehicle FV performs a stop operation on the roadside will be described.

In a case where the relative driving control of the vehicle V is performed in the state where the "relative driving mode" is set as illustrated in FIG. 10B, the environment information acquisition unit 101 detects that the target vehicle FV performs a stop operation on a roadside (starts the stop operation) as detection information related to the travel state of the target vehicle FV.

The driving mode change unit 116 determines that the predetermined condition is satisfied when it is detected that the target vehicle FV performs a stop operation at a roadside based on a detection result of the environment information acquisition unit 101 as the predetermined condition according to the travel state of the target vehicle FV. The driving mode change unit 116 changes the traveling mode of the vehicle V from the "relative driving mode" to the "autonomous driving mode" based on the fact that the predetermined condition is satisfied.

The travel control unit 104 performs autonomous driving control of the vehicle V in the "autonomous driving mode". Specifically, the autonomous driving control of the vehicle V is performed to overtake the target vehicle FV as illustrated in FIG. 10C while grasping the traveling environment information around the vehicle V.

Since the "autonomous driving mode" remains set to a normal state (the enabled state), the travel control unit 104 can shift the traveling control of the vehicle V from the relative driving control to the autonomous driving control.

### (When Target Vehicle is separated at Branch Point)

In addition to the above condition, when the predetermined condition according to the scheduled travel route of the target vehicle FV is satisfied in a case where the relative driving control is performed in the state where the "relative driving mode" is set, the driving mode change unit 116 changes the traveling mode of the vehicle V from the relative driving mode to the "autonomous driving mode". The travel control unit 104 performs autonomous driving control of the vehicle V in the "autonomous driving mode".

The "predetermined condition according to the scheduled travel route" is a case where it is detected that the scheduled travel route of the target vehicle FV and the scheduled travel route of the vehicle V do not match.

For example, it is assumed that the scheduled travel route of the target vehicle FV is acquired in advance, the scheduled travel route does not match the scheduled travel route of the vehicle V, or the scheduled travel route of the target vehicle FV is changed, and the scheduled travel route of the target vehicle FV after the change does not match the scheduled travel route of the vehicle V.

Hereinafter, a case where the target vehicle FV and the vehicle V are separated at a branch point will be described.

The communication unit 115 receives the "target vehicle information" including the position information of the target vehicle FV and the scheduled travel route information of the target vehicle FV from the vehicle information transmission device 50.

In a case where the relative driving control of the vehicle V is performed in the state where the "relative driving mode" is set as illustrated in FIG. 10B, when it is detected that both of the scheduled travel routes do not match based on the target vehicle information obtained by the communication unit 115, the driving mode change unit 116 regards that the "predetermined condition according to the travel state" is satisfied. The driving mode change unit 116 changes the traveling mode of the vehicle V from the relative driving mode to the "autonomous driving mode".

The travel control unit 104 performs autonomous driving control of the vehicle V in the "autonomous driving mode". Specifically, the autonomous driving control of the vehicle V is started separately from the target vehicle FV at a predetermined branch point.

With the above configuration, it is possible to realize the travel control device 1 in which the vehicle V can travel relative to the target vehicle FV and the driving state of the vehicle V can be changed as necessary.

In addition, by using the travel control device 1, it is possible to receive the position information of the target vehicle FV in real time and switch between the "autonomous driving control" and the "relative driving control" according to the behavior (a change in the travel state) of the target vehicle FV.

### <<8. Remote Driving Control>>

Next, "remote driving control" will be described.

The video processing unit 118 acquires external video data of the vehicle V from the plurality of imaging devices 11a to 11i, and generates a synthesized video (synthesized video data) obtained by synthesizing the external videos based on the predetermined layout information.

By generating the synthesized video by combining a plurality of external videos and transmitting the generated synthesized video data from the video processing unit 118 to the remote control device 70, the cost of data communication can be reduced as compared with a case where a plurality of pieces of external video data are transmitted to the remote control device 70.

The communication unit 115 performs transmission and reception of data between the travel control device 1 and the remote control device 70 using the in-vehicle communication device 40.

Specifically, the communication unit 115 transmits the "environment information" obtained by the environment information acquisition unit 101 and the "current position information" obtained by the self-position estimation unit 103 to the remote control device 70 as information required for the "remote driving" of the vehicle V.

The communication unit 115 receives the "driving operation information" of the vehicle V from the remote control device 70 that receives the user input by the operator.

The travel control unit 104 controls the general ECU 31 based on the "driving operation information" of the vehicle V acquired from the remote control device 70, and performs the "remote driving control" of the vehicle V.

With the above configuration, it is possible to realize the travel control device 1 capable of performing "remote driving control" in which the operator remotely operates the vehicle V to cause the vehicle V to travel.

Therefore, it is also possible to switch between the "remote driving control" and the "relative driving control" according to the behavior of the target vehicle FV. When the "remote driving control" is switched to the "relative driving control", the operator is released from an operation of the remote driving of the vehicle V.

### <Travel Control Method (Movement Control Method)>

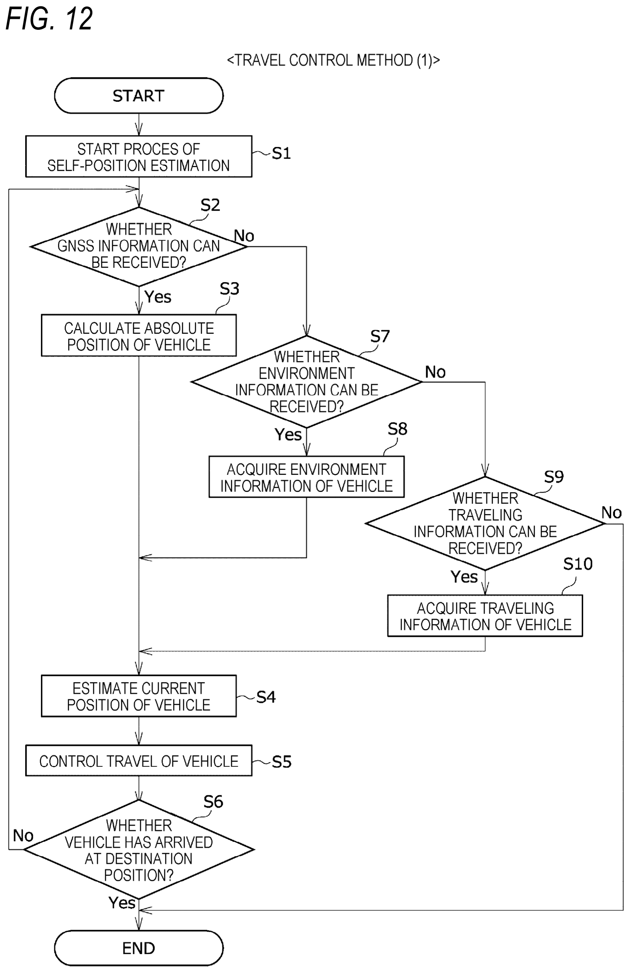

Next, an example of a process of the travel control program (a travel control method) executed by the travel control system S will be described with reference to FIGS. 12 to 15.

The program according to the present embodiment is a program for realizing functional components of the travel control device 1. Specifically, the travel control program is a travel control program for realizing the functions of the environment information acquisition unit 101, the traveling information acquisition unit 102, the self-position estimation unit 103, the travel control unit 104, the reference point specifying unit 105, the reference point recording unit 106, the map creation unit 107, the recognition unit 108, the estimation mode switching unit 109, the detection unit 110, the position error measurement unit 111, the correction route setting unit 112, the traveling direction recognition unit 113, the vehicle detection unit 114, the communication unit 115, the driving mode change unit 116, the travel speed acquisition unit 117, and the video processing unit 118, which are functional components of the travel control device 1 including the storage unit 100. The CPU (the processor) of the travel control device 1 executes the travel control program.

The program is executed by receiving an operation instruction from a user (specifically, a driver of the vehicle V or an external operator).

FIG. 12 is a diagram illustrating a processing flow of a travel control method (1) related to the self-position estimation, which is a processing flow performed in the travel control device 1.

In a travel control flow (1) illustrated in FIG. 12, first, the travel control device 1 starts a process of self-position estimation as the vehicle V starts traveling (step 1 (S1)).

In step 2, the self-position estimation unit 103 (the reception determination unit 103d) determines whether the "GNSS information" of the vehicle V can be received in real time.

In response to determining that the "GNSS information" can be received (Yes in step 2), the process proceeds to step 3. In step 3, the first position estimation unit 103a acquires the "GNSS information" necessary for the point positioning and calculates the "absolute position" of the vehicle V by the point positioning.

On the other hand, in response to determining that the "GNSS information" cannot be received (No in step 2), the process proceeds to step 7.

Subsequent to step 3, in step 4, the first position estimation unit 103a estimates the current position of the vehicle V based on the "absolute position" of the vehicle V.

In step 5, the travel control unit 104 performs travel control of the vehicle V while estimating the current position of the vehicle V.

In step 6, when the vehicle V has arrived at the destination position (Yes in step 6), the travel control device 1 ends the self-position estimation and the travel control. On the other hand, when the vehicle V has not arrived at the destination position in step 6 (No in step 6), the process returns to step 2.

On the other hand, in step 7, the reception determination unit 103d determines whether the "environment information" around the vehicle V can be received in real time.

In response to determining that the "environment information" can be received (Yes in step 7), the process proceeds to step 8, and the second position estimation unit 103b acquires the "environment information" of the vehicle V.

Subsequent to step 8, the process proceeds to step 4. In step 4, the second position estimation unit 103b estimates the current position of the vehicle V based on the "environment information" of the vehicle V.

Then, the process proceeds to step 5 following step 4, and the travel control unit 104 performs travel control of the vehicle V while estimating the current position of the vehicle V. Subsequently, the process proceeds to step 6, and when the vehicle V has arrived at the destination position (Yes in step 6), the travel control device 1 ends the self-position estimation and the travel control.

On the other hand, in response to determining in step 7 that the "environment information" cannot be acquired (No in step 7), the process proceeds to step 9.

In step 9, the reception determination unit 103d determines whether the "traveling information" of the vehicle V can be received in real time.

When the reception determination unit 103d determines that the "traveling information" can be received (Yes in step 9), the process proceeds to step 10. In step 10, the third position estimation unit 103c acquires "traveling information" of the vehicle V.

After step 10, the process proceeds to step 4. In step 4, the third position estimation unit 103c estimates the current position of the vehicle V based on the "traveling information" of the vehicle V.

Then, the process proceeds to step 5 following step 4, and the travel control unit 104 performs travel control of the vehicle V while estimating the current position of the vehicle V. Subsequently, in step 6, when the vehicle V has arrived at the destination position (Yes in step 6), the travel control device 1 ends the self-position estimation and the travel control.

On the other hand, in response to determining in step 9 that the "traveling information" cannot be acquired (No in step 9), the travel control device 1 ends the self-position estimation and the travel control.

After steps 1 to 10, a processing flow of the travel control method (1) illustrated in FIG. 12 ends.

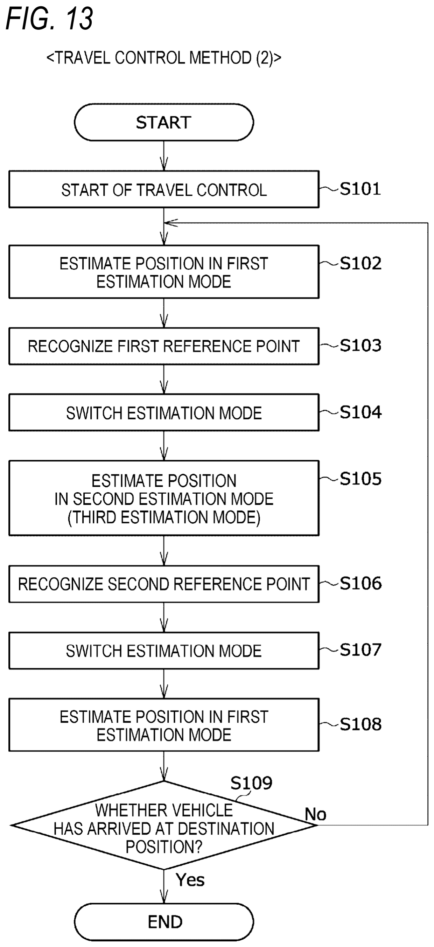

Next, a processing flow of a travel control method (2) related to the self-position estimation using the map information will be described with reference to FIG. 13. FIG. 13 is a diagram illustrating a processing flow of the travel control method (2) related to the self-position estimation using map information.

In the flow of FIG. 13, first, the travel control device 1 starts a travel control process with the start of the travel of the vehicle V (step 101 (S101)).

In step 102, the self-position estimation unit 103 estimates the self-position of the vehicle V in the "first estimation mode" based on the GNSS information. The travel control unit 104 controls the traveling of the vehicle V based on the map information and the "position information (current position)" of the vehicle V.

Next, in step 103, the recognition unit 108 recognizes that the vehicle V has reached the first reference point (the inlet reference point) using the map information when the vehicle V is traveling along the predetermined scheduled travel route.

In step 104, the estimation mode switching unit 109 switches an estimation mode at the first reference point. Specifically, the estimation mode switching unit 109 switches from the "first estimation mode" based on the GNSS information to the "second estimation mode" based on the environment information.

In step 105, the self-position estimation unit 103 estimates the current position of the vehicle V in the "second estimation mode" set by the estimation mode switching unit 109. The travel control unit 104 controls the traveling of the vehicle V based on the map information and the "position information" of the vehicle V.

The estimation mode switching unit 109 may switch from the "first estimation mode" to the "third estimation mode" based on the traveling information.

In step 106, the recognition unit 108 recognizes that the vehicle V has reached the second reference point (the outlet reference point) using the map information when the vehicle V is traveling along the predetermined scheduled travel route.

In step 107, the estimation mode switching unit 109 switches an estimation mode at the second reference point. Specifically, the estimation mode switching unit 109 switches from the "second estimation mode" to the "first estimation mode" again.

In step 108, the self-position estimation unit 103 estimates the current position of the vehicle V in the "first estimation mode" set by the estimation mode switching unit 109. The travel control unit 104 controls the traveling of the vehicle V based on the map information and the "position information" of the vehicle V.

Finally, when the vehicle V has arrived at the destination position in step 109 (Yes in step 109), the travel control device 1 ends the travel control of the vehicle V. When the vehicle V has not arrived at the destination position (No in step 109), the process returns to step 102.

After steps 101 to 109, the processing flow of the travel control method (2) illustrated in FIG. 13 ends.

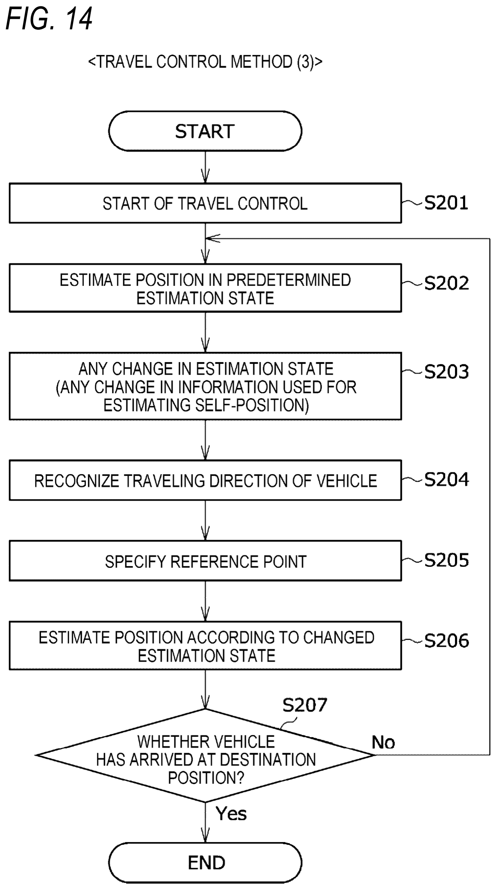

Next, a processing flow of a travel control method (3) based on the traveling direction will be described with reference to FIG. 14. FIG. 14 is a diagram illustrating the processing flow of the travel control method (3) based on the traveling direction.

In the flow of FIG. 14, first, the travel control device 1 starts the travel control process with the start of the travel of the vehicle V (step 201 (S201)).

In step 202, the self-position estimation unit 103 estimates the self-position of the vehicle V according to a predetermined estimation state (the first estimation state or the second estimation state). The travel control unit 104 controls the traveling of the vehicle V based on the "position information (current position)" of the vehicle V.

Next, in step 203, the self-position estimation unit 103 changes an estimation state of the self-position along with a change in the external environment of the vehicle V when the vehicle V is traveling.

In step 204, the traveling direction recognition unit 113 recognizes the "traveling direction" of the vehicle V based on the mode of the change of the estimation state. In other words, the traveling direction recognition unit 113 recognizes the "traveling direction" of the vehicle V based on a change mode of the information (GNSS information, the environment information, and the traveling information used for estimating the self-position.

Specifically, when the "first estimation state" is changed to the "second estimation state" by the self-position estimation unit 103, the traveling direction recognition unit 113 recognizes the traveling direction of the vehicle V as the "first traveling direction" (see FIG. 8).

More specifically, when the "first estimation state" is changed to the "second estimation state", the traveling direction recognition unit 113 recognizes the "first traveling direction" at a timing at which the self-position estimation unit 103 starts estimating the current position of the vehicle V based on the "environment information".

Subsequent to step 204, in step 205, the reference point specifying unit 105 specifies a change position (a switching position) of the estimation state as a reference point.

Specifically, when the "first estimation state" is changed to the "second estimation state" and the "first traveling direction" is recognized, the reference point specifying unit 105 specifies, as the "first reference point", a position where the self-position estimation unit 103 starts estimating the self-position of the vehicle V based on the "environment information".

Subsequently, in step 206, the self-position estimation unit 103 estimates the self-position of the vehicle V according to the changed estimation state. The travel control unit 104 controls the traveling of the vehicle V based on the "position information (current position)" of the vehicle V.

Finally, in step 207, when the vehicle V has arrived at the destination position (Yes in step 207), the travel control device 1 ends the travel control of the vehicle V. On the other hand, when the vehicle V has not arrived at the destination position (No in step 207), the process returns to step 202.

The processing flow of the travel control method (3) illustrated in FIG. 14 ends through the processes of the above steps 201 to 207.

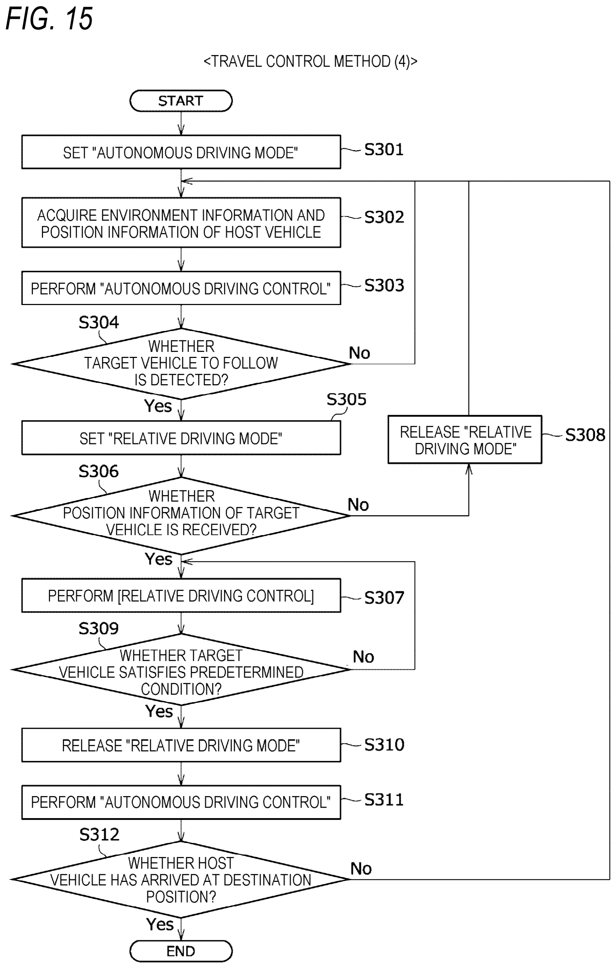

Next, a processing flow of a travel control method (4) related to a change in driving mode will be described with reference to FIG. 15. FIG. 15 is a diagram illustrating the processing flow of the travel control method (4) related to the change in driving mode.

In the flow of FIG. 15, first, the travel control device 1 sets an "autonomous driving mode" with the start of travel of the vehicle V, which is a host vehicle (step 301 (S301)).

The vehicle travel control device 1 may set a "remote operation driving mode" instead of the "autonomous driving mode".

When the "remote operation driving mode" is temporarily set, the travel control unit 104 performs remote operation driving control of the host vehicle V in step S303 to be described later.

Next, in step S302, the environment information acquisition unit 101 starts acquiring the "environment information" around the host vehicle V, and the self-position estimation unit 103 starts acquiring the "position information of the host vehicle V".

In step S303, the travel control unit 104 controls the general ECU 31 based on the environment information and the position information of the host vehicle V, and performs the "autonomous driving control" of the host vehicle V (see FIG. 10A).

Next, in step S304, the vehicle detection unit 114 detects whether a predetermined preceding vehicle is the target vehicle FV to follow on the scheduled travel route of the host vehicle V.

Specifically, the vehicle detection unit 114 determines, based on the predetermined relative driving start condition, whether the preceding vehicle is the target vehicle FV based on recognition results of the identification marks 60 of the predetermined preceding vehicle recognized by the imaging devices 11.

When the vehicle detection unit 114 determines that the preceding vehicle is the target vehicle FV by satisfying the predetermined relative driving start condition (step S304: Yes), the process proceeds to step S305. On the other hand, when the vehicle detection unit 114 does not determine that the predetermined relative driving start condition is not satisfied and the preceding vehicle is the target vehicle FV (step S304: No), the process returns to step S302. That is, the autonomous driving control in the "autonomous driving mode" is continued.

In the case of Yes in step 304, next, in step 305, the driving mode change unit 116 sets the "relative driving mode" in a state where the "autonomous driving mode" is set. In other words, the "relative driving mode" is changed from the disabled state to the enabled state while the "autonomous driving mode" of the host vehicle V is set to the enabled state.

Next, in step S306, the communication unit 115 attempts to receive the "target vehicle information" including the "position information of the target vehicle FV" detected by the vehicle detection unit 114.

Specifically, the communication unit 115 starts communication with the vehicle information transmission device 50 mounted on the target vehicle FV via a network and attempts to receive the position information of the target vehicle FV from the vehicle information transmission device 50.

When the communication unit 115 receives the position information of the target vehicle FV from the target vehicle FV (Yes in step 306), the process proceeds to step 307. In step 307, the travel control unit 104 controls the general ECU 31 based on the "environment information", the "position information of the host vehicle V", and the "target vehicle information of the target vehicle FV", and performs the "relative driving control" of the host vehicle V relative to the target vehicle FV (see FIG. 10B).

On the other hand, when the communication unit 115 does not receive the position information of the target vehicle FV (No in step 306), the process proceeds to step 308. In step 308, in a state where the "autonomous driving mode" is set, the driving mode change unit 116 changes the "relative driving mode" of the host vehicle V from the enabled state to the disabled state, and cancels the relative driving mode. Then, the process returns to step 302.

On the other hand, subsequent to step 307, in step S309, the driving mode change unit 116 determines whether the target vehicle FV satisfies the "predetermined condition" in a case where the relative driving control is performed in the state where the "relative driving mode" is set.

Specifically, the driving mode change unit 116 determines whether the target vehicle FV satisfies the "predetermined condition according to the travel state" or whether the target vehicle FV satisfies the "predetermined condition according to the scheduled travel route".

In response to determining that either the "predetermined condition according to the travel state" or the "predetermined condition according to the scheduled travel route" of the target vehicle FV is satisfied, the driving mode change unit 116 determines that the "predetermined condition" is satisfied.

In response to determining that the target vehicle FV satisfies the "predetermined condition" (Yes in step 309), the process proceeds to step 310. In step 310, the driving mode change unit 116 changes the "relative driving mode" of the host vehicle V from the enabled state to the disabled state, and cancels the relative driving mode.

In step S311, the travel control unit 104 performs autonomous driving control of the host vehicle V in the "autonomous driving mode" as illustrated in FIG. 10C.

For example, when the "predetermined condition according to the travel state" is satisfied by detecting that the traveling target vehicle FV performs a stop operation, the driving mode change unit 116 releases the "relative driving mode" of the host vehicle V, and the travel control unit 104 performs autonomous driving control of the host vehicle V by switching the relative driving control to autonomous driving control.

On the other hand, in response to determining that the target vehicle FV does not satisfy the "predetermined condition" (step S309: NO), the process returns to step S307.

Finally, following the process of step 311, in step 312, it is determined whether the host vehicle V has arrived at the destination position. In response to determining that the host vehicle V has arrived at the destination (Yes in step 312), the travel control device 1 ends the driving control of the host vehicle V and ends the process of FIG. 15. In response to determining that the autonomous driving control in the autonomous driving mode is ended (Yes in step 312), the travel control device 1 ends the driving control of the host vehicle V and ends the process of FIG. 15.

On the other hand, when the travel control device 1 continues to perform the driving control of the host vehicle V, that is, in response to determining that the host vehicle V has not arrived at the destination position (No in step 312), the process returns to step 302.

According to the travel control program, it is possible to more accurately estimate the current position of the traveling vehicle.

Further, the vehicle V can travel relative to the target vehicle FV, and a driving state of the vehicle V can be changed as necessary.

### <Other Embodiments>

In the above embodiment, the travel control program is stored in a recording medium readable by the travel control device 1, and the travel control device 1 reads and executes the program to execute a process. Here, the recording medium readable by the travel control device 1 is a magnetic disk, a magneto-optical disk, a CD-ROM, a DVD-ROM, a semi-conductor memory, or the like.

In addition, dedicated software may be activated using a terminal (a mobile terminal) serving as the travel control device 1, and the travel control program may be executed on a web browser.

In the above embodiment, a travel control device, a travel control method, and a travel control program according to the present disclosure have been mainly described.

The above embodiment is merely an example for facilitating the understanding of the present disclosure, and does not limit the present disclosure. It is needless to say that the present disclosure can be changed or modified without departing from a scope of the present disclosure, and includes the equivalents thereof.

The present disclosure includes the following aspects.
(1) A movement control device that controls movement of a moving object, the movement control device including:
   a self-position estimation unit configured to acquire GNSS information through a GNSS receiver mounted on the moving object and estimate a current position of the moving object based on the GNSS information;
   an environment information acquisition unit configured to acquire environment information around the moving object through a first sensor mounted on the moving object; and
   a movement information acquisition unit configured to acquire movement information of the moving object through a second sensor mounted on the moving object, in which
   the self-position estimation unit is configured to
      estimate a current position of the moving object based on the environment information acquired by the environment information acquisition unit when the GNSS information cannot be acquired, and
      estimate the current position of the moving object based on the movement information acquired by the movement information acquisition unit when the GNSS information and the environment information cannot be acquired.
(2) The movement control device according to (1), further including:
   a reference point specifying unit configured to specify, as a reference point by the movement of the moving object, a position changed from a state where the self-position estimation unit estimates the current position of the moving object based on the GNSS information to a state where the self-position estimation unit estimates the current position of the moving object based on the environment information; and
   a reference point recording unit configured to record information of the reference point specified by the reference point specifying unit.
(3) The movement control device according to (2), further including:
   an estimation mode switching unit configured to switch, when the moving object reaches the reference point recorded by the reference point recording unit, from a first estimation mode in which the self-position estimation unit estimates the current position of the moving object based on the GNSS information at the reference point to a second estimation mode in which the self-position estimation unit estimates the current position of the moving object based on the environment information, in which
   the self-position estimation unit estimates a current position of the moving object by an estimation mode switched by the estimation mode switching unit.
(4) The movement control device according to (3), further including:
   a map creation unit configured to create map information including information of the reference point or update the map information based on history information of the reference point recorded by the reference point recording unit; and
   a detection unit configured to detect that the moving object has reached within a predetermined distance from the reference point included in the map information based on the map information created or updated by the map creation unit, in which
   the estimation mode switching unit prepares to switch an estimation mode at the reference point when the detection unit detects the moving object.
(5) The movement control device according to any one of (1) to (4), in which
   the movement control device controls the movement of the moving object along a predetermined scheduled movement route, and
   the movement control device further includes:
      a position error measurement unit configured to measure, when a third estimation mode in which the self-position estimation unit estimates a current position of the moving object based on the movement information is changed to a first estimation mode in which the self-position estimation unit estimates a current position of the moving object based on the GNSS information, a position error between the current position of the moving object estimated in the third estimation mode and the current position of the moving object estimated in the first estimation mode; and
      a correction route setting unit configured to set a movement correction route to be guided to the scheduled movement route based on the position error measured by the position error measurement unit.
(6) The movement control device according to any one of (3) to (5), in which
   the reference point specifying unit specifies, when a third estimation mode in which the self-position estimation unit estimates a current position of the moving object based on the movement information is changed to the first estimation mode, a position changed from the third estimation mode to the first estimation mode as another reference point,
   the reference point recording unit records information of the other reference point,
   the estimation mode switching unit switches from the third estimation mode to the first estimation mode at the other reference point when the moving object reaches the other reference point,
   the movement control device controls the movement of the moving object along a predetermined scheduled movement route, and
   the movement control device further includes:
      a position error measurement unit configured to measure a position error between a current position of the moving object estimated in the third estimation mode and a current position of the moving object estimated in the first estimation mode when the third estimation mode is switched to the first estimation mode at the other reference point by the estimation mode switching unit; and
      a correction route setting unit configured to set a movement correction route to be guided to the scheduled movement route based on the position error measured at the other reference point.
(7) A movement control method executed by a computer that controls movement of a moving object, the movement control method including:
   by the computer,
   acquiring GNSS information through a GNSS receiver mounted on the moving object and estimating a current position of the moving object based on the GNSS information;
   acquiring environment information around the moving object through a first sensor mounted on the moving object;
   acquiring movement information of the moving object through a second sensor mounted on the moving object; and
   in a case of estimating the current position of the moving object,
      estimating a current position of the moving object based on the environment information when the GNSS information cannot be acquired, and
      estimating a current position of the moving object based on the movement information when the GNSS information and the environment information cannot be acquired.
(8) A movement control program for causing a computer serving as a movement control device that controls movement of a moving object to execute:
   a process of acquiring GNSS information through a GNSS receiver mounted on the moving object and estimating a current position of the moving object based on the GNSS information;
   a process of acquiring environment information around the moving object through a first sensor mounted on the moving object; and
   a process of acquiring movement information of the moving object through a second sensor mounted on the moving object, and
   in the process of estimating a current position of the moving object,
   when the GNSS information cannot be acquired, a current position of the moving object is estimated based on the environment information, and
      when the GNSS information and the environment information cannot be acquired, a current position of the moving object is estimated based on the movement information.

The present application is based on a Japanese Patent Application No. 2023-108895 filed on Jun. 30, 2023, the contents of which are incorporated herein by reference.

## Claims

1. A movement control device that controls movement of a moving object, the movement control device comprising:
a self-position estimation unit configured to acquire GNSS information through a GNSS receiver mounted on the moving object and estimate a current position of the moving object based on the GNSS information;
an environment information acquisition unit configured to acquire environment information around the moving object through a first sensor mounted on the moving object; and
a movement information acquisition unit configured to acquire movement information of the moving object through a second sensor mounted on the moving object, wherein
the self-position estimation unit is configured to
estimate the current position of the moving object based on the environment information acquired by the environment information acquisition unit when the GNSS information cannot be acquired, and
estimate the current position of the moving object based on the movement information acquired by the movement information acquisition unit when the GNSS information and the environment information cannot be acquired.

2. The movement control device according to claim 1, further comprising:
a reference point specifying unit configured to specify, as a reference point by the movement of the moving object, a position changed from a state where the self-position estimation unit estimates the current position of the moving object based on the GNSS information to a state where the self-position estimation unit estimates the current position of the moving object based on the environment information; and
a reference point recording unit configured to record information of the reference point specified by the reference point specifying unit.

3. The movement control device according to claim 2, further comprising:
an estimation mode switching unit configured to switch, when the moving object reaches the reference point recorded by the reference point recording unit, from a first estimation mode in which the self-position estimation unit estimates the current position of the moving object based on the GNSS information at the reference point to a second estimation mode in which the self-position estimation unit estimates the current position of the moving object based on the environment information, wherein
the self-position estimation unit estimates a current position of the moving object by an estimation mode switched by the estimation mode switching unit.

4. The movement control device according to claim 3, further comprising:
a map creation unit configured to create map information including information of the reference point or update the map information based on history information of the reference point recorded by the reference point recording unit; and
a detection unit configured to detect that the moving object has reached within a predetermined distance from the reference point included in the map information based on the map information created or updated by the map creation unit, wherein
the estimation mode switching unit prepares to switch an estimation mode at the reference point when the detection unit detects the moving object.

5. The movement control device according to claim 1, wherein
the movement control device controls the movement of the moving object along a predetermined scheduled movement route, and
the movement control device further comprises:
a position error measurement unit configured to measure, when a third estimation mode in which the self-position estimation unit estimates a current position of the moving object based on the movement information is changed to a first estimation mode in which the self-position estimation unit estimates a current position of the moving object based on the GNSS information, a position error between the current position of the moving object estimated in the third estimation mode and the current position of the moving object estimated in the first estimation mode; and
a correction route setting unit configured to set a movement correction route to be guided to the scheduled movement route based on the position error measured by the position error measurement unit.

6. The movement control device according to claim 3 or 4, wherein
the reference point specifying unit specifies, when a third estimation mode in which the self-position estimation unit estimates a current position of the moving object based on the movement information is changed to the first estimation mode, a position changed from the third estimation mode to the first estimation mode as another reference point,
the reference point recording unit records information of the other reference point,
the estimation mode switching unit switches from the third estimation mode to the first estimation mode at the other reference point when the moving object reaches the other reference point,
the movement control device controls the movement of the moving object along a predetermined scheduled movement route, and
the movement control device further comprises:
a position error measurement unit configured to measure a position error between a current position of the moving object estimated in the third estimation mode and a current position of the moving object estimated in the first estimation mode when the third estimation mode is switched to the first estimation mode at the other reference point by the estimation mode switching unit; and
a correction route setting unit configured to set a movement correction route to be guided to the scheduled movement route based on the position error measured at the other reference point.

7. A movement control method executed by a computer that controls movement of a moving object, the movement control method comprising:
by the computer,
acquiring GNSS information through a GNSS receiver mounted on the moving object and estimating a current position of the moving object based on the GNSS information;
acquiring environment information around the moving object through a first sensor mounted on the moving object;
acquiring movement information of the moving object through a second sensor mounted on the moving object; and
in a case of estimating the current position of the moving object,
estimating the current position of the moving object based on the environment information when the GNSS information cannot be acquired, and
estimating the current position of the moving object based on the movement information when the GNSS information and the environment information cannot be acquired.

8. A movement control program for causing a computer serving as a movement control device that controls movement of a moving object to execute:
a process of acquiring GNSS information through a GNSS receiver mounted on the moving object and estimating a current position of the moving object based on the GNSS information;
a process of acquiring environment information around the moving object through a first sensor mounted on the moving object; and
a process of acquiring movement information of the moving object through a second sensor mounted on the moving object, and
in the process of estimating a current position of the moving object,
when the GNSS information cannot be acquired, the current position of the moving object is estimated based on the environment information, and
when the GNSS information and the environment information cannot be acquired, the current position of the moving object is estimated based on the movement information.
